(19) **Europäisches Patentamt** / **European Patent Office** / **Office européen des brevets**

(11) **EP 4 068 693 B1**

(12) **EUROPEAN PATENT SPECIFICATION**

(45) Date of publication and mention
of the grant of the patent:
**22.10.2025 Bulletin 2025/43**

(21) Application number: **21165759.8**

(22) Date of filing: **30.03.2021**

(51) International Patent Classification (IPC):
*H04L 41/0631* (2022.01)    *H04L 41/16* (2022.01)
*H04L 41/142* (2022.01)    *H04L 41/069* (2022.01)
*H04L 41/22* (2022.01)    *H04L 41/122* (2022.01)

(52) Cooperative Patent Classification (CPC):
**H04L 41/065; H04L 41/069; H04L 41/122;
H04L 41/142; H04L 41/16; H04L 41/22**

(54) **METHODS AND DEVICES FOR NETWORK MONITORING**

VERFAHREN UND VORRICHTUNGEN ZUR NETZWERKÜBERWACHUNG

PROCÉDÉS ET DISPOSITIFS DE SURVEILLANCE DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2022 Bulletin 2022/40**

(73) Proprietor: **Nokia Solutions and Networks Oy
02610 Espoo (FI)**

(72) Inventors:
• **Bouzid, Makram
91400 Orsay (FR)**
• **Kostadinov, Dimitre Davidov
75015 Paris (FR)**
• **Aghasaryan, Armen
91600 Savigny sur Orge (FR)**

(74) Representative: **Novagraaf Technologies
Bâtiment O2
2, rue Sarah Bernhardt
CS90017
92665 Asnières-sur-Seine Cedex (FR)**

(56) References cited:
**EP-A1- 3 796 176    US-A1- 2017 279 660**

• **ELMAJED ARIJ ET AL: "Machine Learning
Approaches to Early Fault Detection and
Identification in NFV Architectures", 2020 6TH
IEEE CONFERENCE ON NETWORK
SOFTWARIZATION (NETSOFT), IEEE, 29 June
2020 (2020-06-29), pages 200 - 208,
XP033809892, DOI: 10.1109/
NETSOFT48620.2020.9165361**

EP 4 068 693 B1

**Description**

TECHNICAL FIELD

The present application concerns methods and devices for network monitoring, in particular for detecting network states such as faulty behavior in the context of communication networks.

BACKGROUND

Complex networked systems such as modern telecommunication networks generate huge amounts of alarm logs and notifications, in which it is extremely challenging to distinguish real fault symptoms from noisy alarms. Exemplary networks combine for example 5G, IoT and Cloud technologies. Human operators striving to identify fault situations and localize the root causes may be overwhelmed with high volumes of data and may fail to provide timely explanations. There is a need for powerful tools for automated fault identification and root cause analysis (RCA).
Documents EP3796176A1, US2017/279960A1 and the article by Elmajed et al "Machine Learning Approaches to Early Fault Detection and Identification in NFV Architectures") - XP033809892 concern the subject matter described herein.

SUMMARY

An embodiment concerns a data processing device for providing training data to a classifier for monitoring a network of resource instances, said classifier providing a network state_class, wherein resource instances are organized according to a topology, resource instances having respective resource types defining a resource category, at least part of the resource instances generating alarms, alarms having respective alarm types defining alarm categories, comprising:

- means for obtaining an alarm dependency structure, ADS, comprising dependencies between alarms, wherein an alarm of said ADS is associated with the resource instance which generated it and with its alarm type, said ADS being associated with a network state class;
- means for assigning topological information to a given dependency, said topological information being function of a link, within the topology, of the resource instances associated with the alarms linked by said given dependency;
- means for replacing respective resource instances associated with alarms by their respective resource types;
- means for merging a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm of the second pair and (c) if the topological information of the first dependency and of the second dependency is identical;
- means for providing training data for classifier training, said training data comprising said network state class and a summarized alarm dependency structure, SADS, resulting from said assigning, replacing and merging.

According to an embodiment, said means for obtaining a first alarm dependency structure are further configured to obtain the dependencies of said first alarm dependency structure from an analysis of correlations and/or causal relationships of events in an alarm log.
According to an embodiment, the topology comprises resources instances of said network and physical and/or virtual and/or logical connections between said network resources.
According to an embodiment, said topological information comprises, for hierarchical network topologies, one of:

- the resource type sequence of the longest common resource instance sequence obtained by matching resource instance sequences leading from a root node of said hierarchical topology to the resource instances of alarms linked by a dependency; or
- the last common term closest to the resource instances of the resource type sequence of the longest common resource instance sequence obtained by matching resource instance sequences leading from a root node of said hierarchical topology to the resource instances of alarms linked by a dependency, in case said last term of the longest common resource type sequence allows to deterministically determine said type sequence from the root.

According to an embodiment, said topological information comprises, for flat network topologies, the shortest common resource type sequence between two resource instances of alarms linked by a dependency.
According to an embodiment, said assigning, replacing and merging means are further configured to process a plurality of alarm dependency structures to obtain a single summarized alarm dependency structure.

According to an embodiment, said class is one among one or more normal behavior states and one or more faulty behavior states.

According to an embodiment, said training means are further configured to train a classifier with a plurality of summarized alarm dependency structures associated with at least one class.

According to an embodiment, the device further comprises:

- means for visualizing said alarm dependency structure in the form of a graph in which dependencies are shown as edges linking vertices, wherein a vertex representation comprises a resource instance and a corresponding resource type, and an alarm type for resource instances which generated an alarm; and
- means for visualizing said summarized alarm dependency structure in the form of a graph in which dependencies are shown as edges linking vertices, wherein dependencies are represented with their associated topology information and wherein a vertex representation comprises a resource type and an alarm type.

According to an embodiment, said means for merging are further configured to aggregate metadata associated with at least part of a plurality of dependencies of said alarm dependency structure being merged into one dependency, to form metadata of the one dependency resulting from the merging.

An embodiment concerns a data processing device for monitoring a network of resource instances wherein resource instances are organized according to a topology, resource instances having respective resource types defining a resource category, at least part of the resource instances generating alarms, alarms having respective alarm types defining alarm categories, comprising:

- means for obtaining a second alarm dependency structure, ADS, for which a network state class is to be determined, said ADS comprising dependencies between alarms, wherein an alarm of said ADS is associated with the resource instance which generated it and with its alarm type;
- means for assigning topological information to a given dependency, said topological information being function of a link, within the topology, of the resource instances associated with the alarms linked by said given dependency;
- means for replacing respective resource instances associated with alarms by their respective resource types;
- means for merging a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm of the second pair and (c) if the topological information of the first dependency and of the second dependency is identical, and for providing a summarized alarm dependency structure, SADS, resulting from said assigning, replacing and merging, to classifier means;
- classifier means for providing a network state class as a function of said SADS; wherein said classifier means use a classifier model obtained from prior training based on at least one summarized alarm dependency structure and an associated known network state class; wherein the classifier model was previously trained using training data obtained by applying a method according to the next paragraph.

An embodiment concerns a method carried out by a data processing device for providing training data to a classifier for monitoring a network of resource instances, said classifier providing a network state class for an alarm dependency structure, wherein resource instances are organized according to a topology, resource instances having respective resource types defining a resource category, at least part of the resource instances generating alarms, alarms having respective alarm types defining alarm categories, comprising:

- obtaining an alarm dependency structure, ADS, comprising dependencies between alarms, wherein an alarm of said ADS is associated with the resource instance which generated it and with its alarm type, said ADS being associated with a network state class;
- assigning topological information to a given dependency, said topological information being function of a link, within the topology, of the resource instances associated with the alarms linked by said given dependency;
- replacing respective resource instances associated with alarms by their respective resource types;
- merging a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm of the second pair and (c) if the topological information of the first dependency and of the second dependency is identical;
- providing said network state class and a summarized alarm dependency structure, SADS, resulting from said assigning, replacing and merging, for classifier training.

An embodiment concerns a method carried out by a data processing device for monitoring a network of resource instances wherein resource instances are organized according to a topology, resource instances having respective resource types defining a resource category, at least part of the resource instances generating alarms, alarms having respective alarm types defining alarm categories, comprising:

- obtaining an alarm dependency structure, ADS, for which a network state class is to be determined, said ADS comprising dependencies between alarms, wherein an alarm of said ADS is associated with the resource instance which generated it and with its alarm type;
- assigning topological information to a given dependency, said topological information being function of a link, within the topology, of the resource instances associated with the alarms linked by said given dependency;
- replacing (respective resource instances associated with alarms by their respective resource types;
- merging a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm of the second pair and (c) if the topological information of the first dependency and of the second dependency is identical;
- providing a summarized alarm dependency structure, SADS, resulting from said assigning, replacing and merging, to a classifier;
- obtaining a network state class as a function of said SADS using a classifier model obtained from prior training based on at least one summarized alarm dependency structure and an associated known network state class; wherein the classifier model was previously trained using training data obtained by applying a method according the previous paragraph.

BRIEF DESCRIPTION OF THE DRAWINGS

Example embodiments will be more fully understood from the detailed description given herein below and the accompanying drawings, which are given by way of illustration only.

FIG. 1 is a block diagram of high-level functional blocks for the summarization of alarm dependency structures according to an embodiment;
FIG. 2 is a diagram of a non-limiting example of a hierarchical topology of a radio access network, RAN, architecture in a cellular network context;
FIG. 3 is a diagram of a non-limiting example of a flat topology of cells in the context of a cellular network;
FIG. 4a and FIG. 4b are respective visualizations of two Alarm Dependency Structure, ADS, graphs with different topological contexts, according to a non-limiting embodiment;
FIG. 4c and FIG. 4d are respective visualizations of the graphs of FIG. 4a and FIG. 4b in the topological context of the cellular network illustrated by FIG. 2;
FIG. 5a is a visualization of the Summarized Alarm Dependency Structure, SADS, of FIG. 4a and FIG. 4b when topological information is disregarded in the classifier training architecture;
FIG. 16 is a functional block diagram of a non-limiting embodiment of an architecture using a previously trained classifier to classify alarm logs;
FIG. 17 is a block diagram of a processing device for carrying out part or all of the methods described herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various exemplary embodiments will now be described more fully with reference to the accompanying drawings. However, specific structural and functional details disclosed herein are merely representative for purposes of describing example embodiments. The exemplary embodiments may be embodied in many alternate forms and should not be construed as limited to only the embodiments set forth herein. It should be understood that there is no intent to limit example embodiments to the particular forms disclosed.

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, functional blocks denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may be any physical media that can be read, written or more generally accessed by a computer / a processing device. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc. Embodiments of a computer-readable medium include, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

According to example embodiments, network elements, network devices, data servers, network resource controllers, network apparatuses, clients, routers, gateways, network nodes, computers, cloud-based servers, web servers, application servers, proxies or proxy servers, or the like, may be (or include) hardware, firmware, hardware executing software or any combination thereof. Such hardware may include processing or control circuitry such as, but not limited to, one or more processors, one or more CPUs, one or more integrated circuits one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

A set of interconnected entities generates a flow of events. This can be the case for managed objects in networks, such as telecommunication networks. Fault situations may need to be identified and the root causes localized. Events can for example comprise alarms and/or notifications that reflect local state changes at each network object. Other types of events may also be taken into consideration. Events such as alarms and notifications can be present during the normal operation of the network, they can also reflect the occurrence of important faults in the underlying hardware or software components. In what follows, the terms event and alarm are used interchangeably.

According to an embodiment, reusable characteristics of event series that can help automate fault identification and root cause localization are defined. More specifically, given a set of classified or categorized situations, reusable representations of the corresponding event series are extracted. These representations are reproduced in other network deployments of the same type.

According to an embodiment, summarized alarm dependency structures are generated, these structures representing patterns of dependencies that characterize network situations of interest such as different fault types or normal behaviors that manifest themselves through generation of alarms and notifications. The summarized structures preserve some information on the topological context. This enables creation of abstractions which are applicable to different network instances with topology variations. This feature is particularly relevant to 5G radio access and core networks, given the virtualization and adaptability features; 5G networks can be dynamically deployed, reconfigured, or scaled up/down. In such networks, the summarized alarm dependency structures as detailed below can be transferred to alternative deployments or modified topologies.

Several network management and supervision related products such as NetAct, NetCool, UFM (Unified Fault Management) / PTF, can benefit from the capability provided by the current invention to detect, and classify fault situations, to help in root causes identification and to represent the topology in a reusable summarized form.

In the following description, the notations 'X_y' and 'X$_y$' are equivalent.

In what follows, the following terminology is used:

- A managed object is an abstract representation of network resources, covering their physical or logical entities, hardware or software components. In a telecommunications environment, a managed object corresponds to a resource within this telecommunications environment that may be managed through the use of operation, administration, maintenance, and provisioning protocols. In the present description, managed objects are referred to as 'Resource Instances', RI.
- 'Resource Types', RT, represent categories of network resources, e.g. a base station, a multiradio base transceiver station (MRBTS), LTE eNodeB Base Transceiver Station (LNBTS), a controller, a cell, radio transmitter, software components, other managed object types that may generate events... The notation 'RI:RT' is used to indicate that a resource instance RI is of type RT.
- 'Alarm' (or 'Notification', or 'Event') is an event associated with a resource instance and which is raised when the latter enters some state of interest, e.g. encounters performance issues, or fails to deliver an expected service. Alarms do not necessarily characterize a fault, but as indicated above may qualify any state of interest. Alarm is defined as a tuple <Alarm Type, Resource Instance:RT>, or <AT, RI:RT>. An Alarm can have multiple occurrences (at different times) at the same resource instance.
- 'Alarm log' is a list of Alarm occurrences at possibly different resource instances.
- 'Alarm Type', AT, allows a network administrator to group alarms into categories according to their common semantics or the function used to generate them, e.g. Excessive CPU Usage, Loss of Signal, Channel Failure Rate Above Threshold, etc.
- 'Resource Topology', TOPO, is a graph composed of resource instances as nodes, and their (topological) connections as edges.

A non-limiting example of a log file is provided below. A log file can comprise multiple lines of the following format: ST;ET;RI;RT;AT

where:

ST: Start Timestamp of the alarm
ET: End Timestamp of the alarm
RI: Resource Instance on which the alarm occurred
RT: Resource Type
AT: Alarm Type

```
Example of a log file:
2021/03/15 00:13:24;2021/01/13 00:35:11;trx_1112;TRX;AT2
2021/03/15 00:22:05;2021/01/13 00:47:54;trx_1111;TRX;AT1
2021/03/15 01:05:18;2021/01/13 01:17:33;trx_1111;TRX;AT1
2021/03/15 01:09:37;2021/01/13 01:24:39;trx_1112;TRX;AT2
...
```

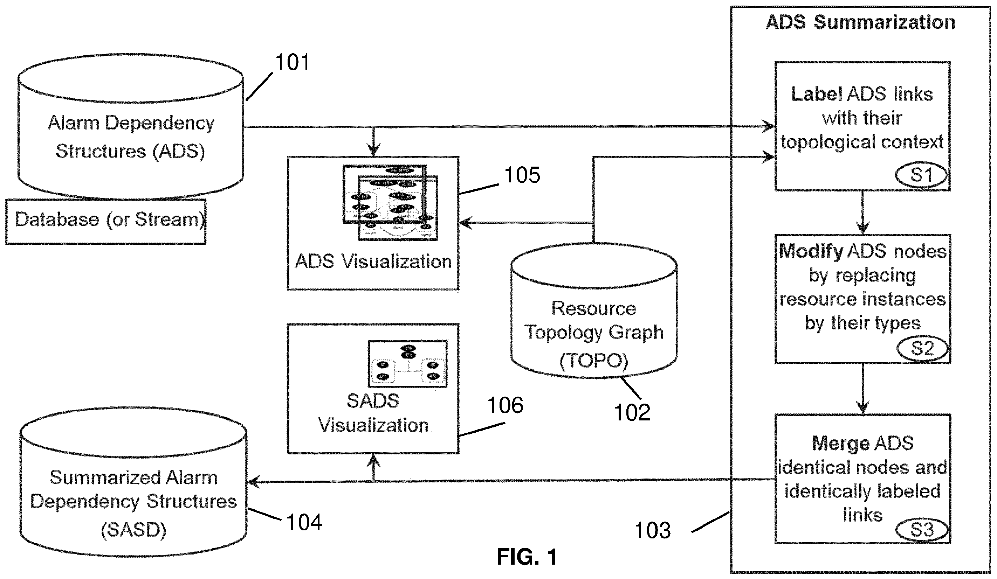

According to the present embodiment, identification of states in event logs, such as fault identification in alarm logs is based on the summarization of dependency structures. FIG. 1 is a high level functional diagram of the functional blocks used in the summarization.

According to the present embodiment, the input to the summarization comprises two graph structures:

- An Alarm Dependency Structure, ADS, the source of which is referenced 101 in FIG. 1, which is based on a set of dependencies such as correlations or causal relationships between Alarms. Such dependencies are typically derived from data based on the analysis of co-occurrences or temporal orderings of events.
ADS is a graph defined by alarms <Alarm Type, Resource Instance:RT>, as vertices and alarm dependencies as edges, <<AT_i, RI_i:RT_i>,<AT_j, RI_j:RT_j>> - these edges are represented as thick lines in the drawings. Non-limiting examples of methods to determine dependencies comprise :

  (a) use of a Jaccard coefficient to identify alarm correlations, by measuring the proportion of time during which two alarms are active with respect to the time during which at least one of them is active (https://en.wikipedia.org/wiki/Jaccard_index); and
  (b) use of Granger Causality to determine if one event series is useful to forecast another (https://en.wikipedia.org/wiki/Granger_causality).

- A Resource Topology graph, TOPO, the source of which is referenced 102 in FIG. 1, as defined above; it contains resource instance dependencies which can be retrieved 1/ from the hierarchy of managed objects (e.g. from resource naming schemes), 2/ from object connectivity data in configuration or provisioning tools, 3/ from other sources describing network device architecture and implementation. In other words, the resource topology graph reflects physical, virtual and/or logical connectivity between the network resources and describes the specifics of a given (sub-)network deployment.
TOPO is a graph defined by resource instances <Resource Instance:RT> as vertices and topological relationships <<RI_i:RT_i>,<RI_j:RT_j>> of the resource instances as edges - these edges are represented by thin lines in the drawings.

The two dependency graphs ADS and TOPO are fed to a summarization module 103, which outputs a 'summarized ADS' graph, SADS, 104. The summarization module carries out three main operations S1, S2 and S3 in FIG. 1 and which will be described in detail below. Visualization of graphs may be performed, e.g. module 105 for visualizing the ADS and its topological context, or module 106 for visualizing the SADS.

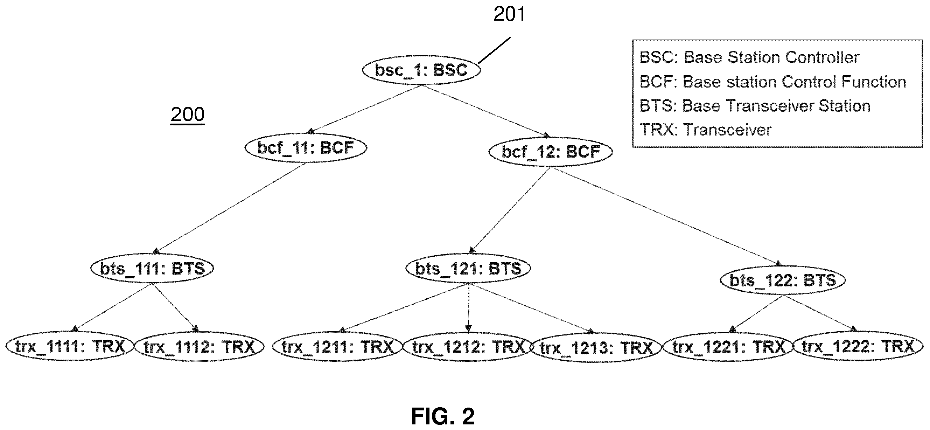

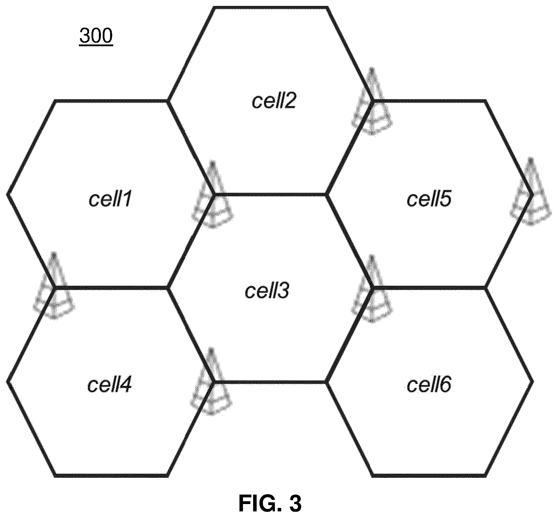

The summarization process may use topological graphs representing very different topologies. Two examples are provided in FIG. 2 and FIG. 3.

FIG. 2 is a schematic diagram of a non-limiting exemplary topology, in this case a hierarchical topology 200 in the context of a Radio Access Network, RAN, in a cellular network. This example will be referred to at numerous occasions in the detailed explanations of the summarization process to exemplify a possible, but non-limiting, real-world implementation.

The following resource types RT are used in the example of FIG. 2, in an order from the highest hierarchical component to the lowest hierarchical component:

  BSC: Base Station Controller
  BCF: Base Station Control Function
  BTS: Base Transceiver Station
  TRX: Transceiver

In FIG. 2, each node represents a resource instance, resource type labels are indicated in upper case letters, while resource instance labels are indicated in lower case letters, followed by an identifier composed of a number of digits that depends on the level in the hierarchy (one digit for a BSC instance to four digits for TRX instance). An edge indicates a topological link between resource instances, directed from parent node to child node, indicating a hierarchical relationship in this case. E.g. a parent BSC can have multiple BCF as children.

FIG. 3 is a schematic diagram of another exemplary topology, in this case a 'flat' topology 300. The context is again that of cells in a cellular network - 'RC' stands for 'Radio Cell', which in the case of the present example is one resource type, and 'cellx' stands for a cell ID, with 'x' being an identifier of the cell instance. In this example, any two cells may either be adjacent or non-adjacent. As a non-limiting example, the topological context between two cells (labelled 'TOPO_CONTEXT' in the present description) is set as equal to 1 in case of a geographical adjacency between the radio cells, 0 in case of no geographical adjacency. For the example of FIG. 3, the topology can be expressed as follows:

$$TOPO\_CONTEXT(cell1:RC, cell2:RC) = 1$$

$$TOPO\_CONTEXT(cell1:RC, cell3:RC) = 1$$

$$TOPO\_CONTEXT(cell1:RC, cell5:RC) = 0$$

$$\ldots$$

Given that each Alarm contains a reference to a resource instance, <AT_i,RI_i:RT_i>, the two input graphs can be connected into a common graph structure by mapping Alarm nodes in the ADS graph to resource instance nodes in the TOPO graph.

While ADS are derived from the data generated in a fixed network topology and can therefore be reused in identical network contexts, they capture more general behaviors that can be reproduced on many variants of the original topology. According to the present embodiment, such specific ADS structures are generalized in order to enable their applicability in other network contexts which preserve some topological constraints, i.e. deployments of the same network technology having similar (but not necessarily identical) topologies.

An exemplary embodiment of the ADS summarization module will now be described. According to this embodiment, the following steps, or operations, are performed:

- Step 1 ('S1'): label (i.e. associate / map) each alarm dependency <<AT_i, RI_i:RT_i>,<AT_j, RI_j:RT_j>> by (with / to) the topological context that relates the two resource instances present in its vertices:

  Label(<<AT_i, RI_i:RT_i>,<AT_j ,RI_j:RT_j>>) = TOPO_CONTEXT(RI_i:RT_i,  RI_j:RT_j),

- Step 2 ('S2'): modify each alarm vertex by replacing the resource instance by its type:

  <AT_i, RI_i:RT_i> => <AT_i, RT_i>,

- Step 3 ('S3'): merge the resulting identical vertices and edges, considering the labels (i.e. labels of two edges need to be identical for a merge to be possible).

Note that a given topology may not always enable deriving a topological context for each dependency - in this case, the topological context may simple be set to 'empty'.

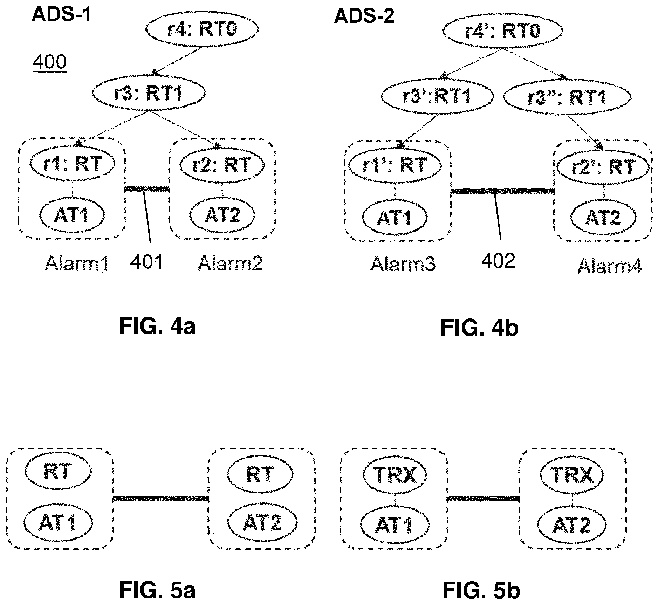

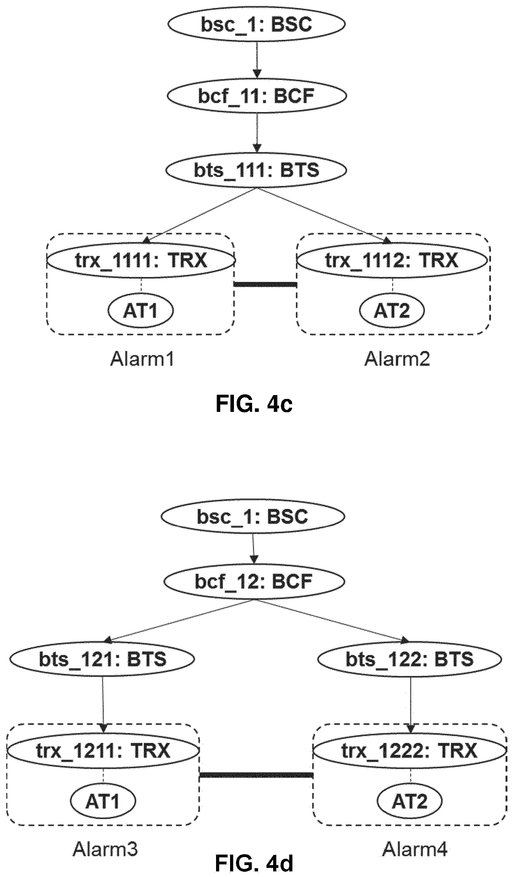

FIG. 4a and FIG. 4b are two examples of ADS visualizations corresponding to two different topologies. FIG. 4c and FIG. 4d are the respective equivalents to FIG. 4a and FIG. 4b in the frame of the non-limiting cellular network example and resource types of FIG. 2. In the context of FIG. 4c and FIG. 4d and also some of the subsequent drawings, non-limiting examples of transmitter alarm types are as follows, noting that only alarm types AT1 and AT2 are used in the frame of FIG. 4c and FIG. 4d.

    AT1: "D-CHANNEL FAILURE"
    AT2: "TRANSMITTER (TRX) FAULTY"
    AT3: "TRANSMITTER (TRX) RESTARTED"
    AT4: "EXCESSIVE TRANSMISSION CHANNEL (TCH) INTERFERENCE"

In the above example, the D-channel is the channel that carries control and signaling information ("D" stands for "delta").

FIG. 4a and FIG. 4b can be used to show the impact of the topological graph information (taken into account in step 1) on the summarization process. To illustrate this impact, only the last two steps, without the 'topological labeling' of step 1, are applied to the two graphs of FIG. 4a and FIG. 4b. This creates an abstraction from the specific network topology, where the resulting graph will merge all the ADS nodes which differ only by their resource instance but map to the same <AT_i,RT_i>. For example, considering two alarm dependencies 401, 402 with pairwise identical alarm and resource types <<AT1, r1:RT>,<AT2, r2:RT>> and <<AT1, r1":RT>,<AT2, r2':RT>>, as respectively shown in FIG. 4a and FIG. 4b. By applying steps 2 and 3, two nodes with a single edge <<AT1, RT>, <AT2, RT>> are obtained, as illustrated in FIG. 5a. FIG. 5b is the equivalent of FIG. 5a in the cellular network context of FIG. 2.

Such an abstraction, however, does not preserve any topological information, although it is desired to maintain information about the topological relationships between the resource instances involved in each alarm dependency at a desired level, e.g. at least at a high level. Namely, in the example above it can be important to preserve the difference between the two topological contexts; according to the tree structure of the topology graph, the resource instances on the left-side, r1 and r2, share a common parent, while the ones on the right-side share only a common grand-parent. This information can be encoded as an edge label, which can also be called edge type, in step 1, which would prevent the two dependencies from being merged during the summarization. As an example, if the root-cause in case of FIG. 4a is the parent and in case of FIG. 4b is the grand-parent, grouping their alarm dependencies without considering their topological contexts would produce an abstract pattern, FIG. 5a, with two possible root-causes, which is ambiguous and not useful for other network instances with the same configuration. On the other hand, keeping the detailed topological information, including the resource instances, would not permit the use of the identified alarm dependency patterns in different network instances since the involved resource instances would be different.

The function of the topological labelling introduced at step 1 is to capture certain aspects of the topological relationships between two resource instances. Capturing this information for use in the summarization process can be performed in different ways.

According to a first non-limiting example, which can be used in hierarchical topologies (tree structures), the topological context used corresponds to the longest common prefix in terms of resource instances leading from the root node to each of the resource instances, in which the involved resource instances are replaced by their types. The result can be used to generate the required label. This approach will be used in conjunction with the examples in the drawings.

According to a second non-limiting example, which can be used in flat hierarchies, the shortest path between two resource instances is used to model the topological context. With regard to this second example, the topology of FIG. 3 is an extreme case - the binary topological context mentioned above and indicative of the presence or absence of a direct neighborhood relationship can be used.

Other practical definitions of topological context can be used to reflect the operator experience on what should be considered as a topological differentiator for the representation of reusable dependency patterns.

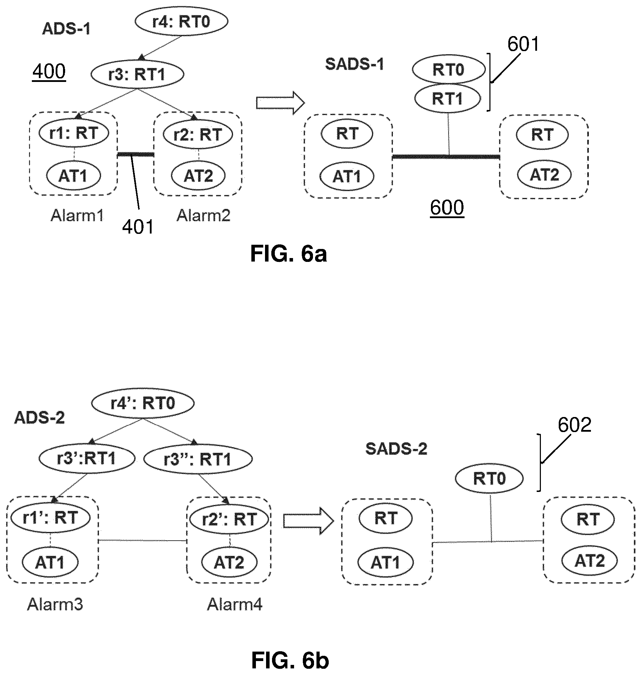

FIG. 6a and FIG. 6b are graphs providing an example of summarization using this method; the right part of FIG. 6a shows the summarized graph SADS-1 600 which is obtained from ADS-1 400 as shown also in FIG. 4a, whereas the right part of FIG. 6b shows the summarized graph SADS-2 which is obtained from ADS-2 as shown in FIG. 4b. As expected, SADS-1 and SADS-2 differ in their topological context, i.e. their edge labels corresponding to the longest common prefix, RT0/RT1 and RT0, respectively, referenced 601 and 602 in the drawings.

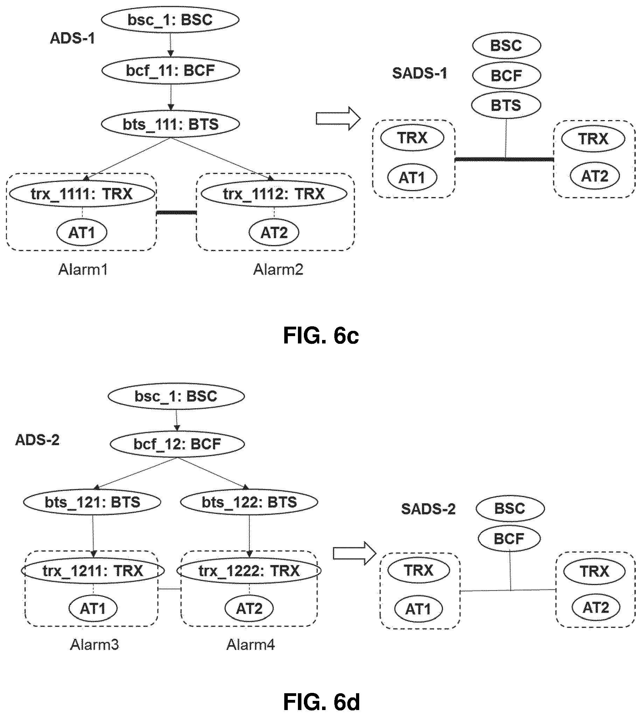

FIG. 6c shows the summarized graph SADS-1 when in the context of the exemplary communication network of FIG. 2. FIG. 6d shows the summarized graph SADS-2 when in the context of the exemplary communication network of FIG. 2.

According to a variant embodiment, for cases in which the topology is such that the path from the root to each involved resource type is deterministic, such as for hierarchical topologies, only the last term of the prefix is kept, since in these cases, the terms above this last term are identical. For example for SADS-1 in FIG. 6a, the label RT0/RT1 could be reduced to RT1. For clarity purposes, labels in the drawings will however show all terms.

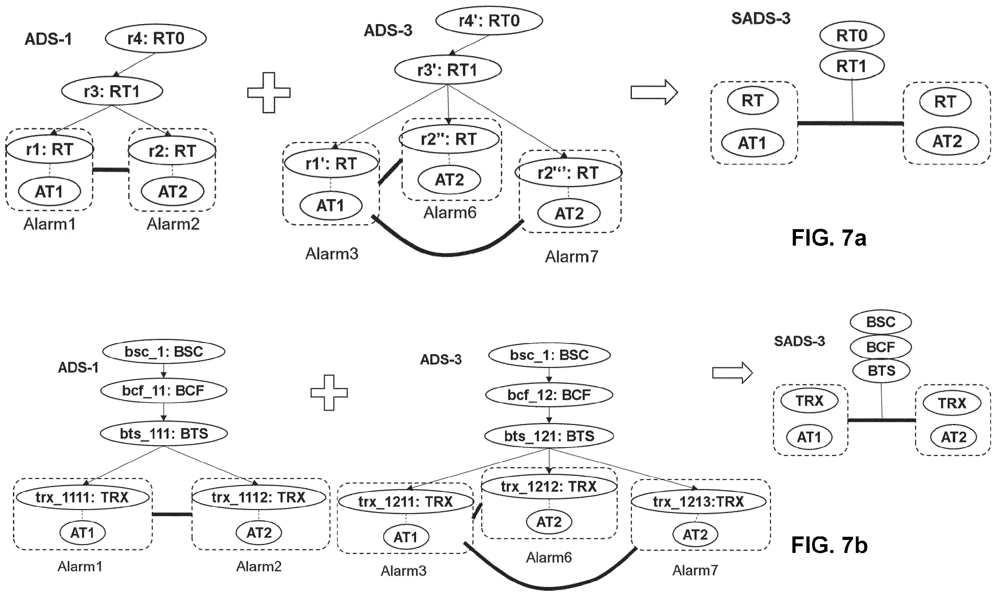

FIG. 7a provides another example of summarization - the same summarized graph SADS-3 is obtained from two equivalent ADS, which are ADS-1 and ADS-3. The graph ADS-1 is the same as ADS-1 in FIG. 4a. The second graph ADS-3 contains two alarm dependencies <<AT1, r1":RT>,<AT2, r2":RT>> and <<AT1, r1":RT>,<AT2, r2‴:RT>>, with all the edge leaves sharing the same parent. Similarly to SADS-1, the summarized graph SADS-3 has an edge labelled with the shared topological context between modified alarm vertices corresponding to the longest common prefix, RT0/RT1. In the case of ADS-3, there are two resources of the same type (r2":RT and r2‴:RT) each associated with alarms of the same type (Alarm 6: AT2 and Alarm 7: AT2) which in the summarization process are merged into a single vertex given that they also have dependencies with identical topological information to another resource, r1': RT. As a result, both ADS-1 and ADS-3 give the same SADS, SADS-3.

FIG. 7b shows the graphs of FIG. 7a when in the context of the exemplary communication network of FIG. 2.

According to a variant embodiment, when different ADS can be summarized in a same SADS (i.e. several ADS summarized individually result in the same SADS), information representative of this fact is associated with the SADS, since this is an indicator of the frequency of the pattern. More weight can then be given a SADS based on this information.

The summarization process according to an embodiment will now be described in more detail. As indicated in Figure 1, the summarization process takes as input two graph structures: the Alarm Dependency Structure (ADS) and the Resource Topology graph (TOPO), as defined in the previous section. The ADS can be either fetched by the summarization process or the visualization module from a database or streamed to them. The TOPO is fetched by the summarization process or the visualization module from a database.

According to an embodiment, in order to facilitate the application of the summarization solution, a tabular representation for ADS is used, comprising a set of dependency relationships with the following format:

$$\mathrm{ADS} = \{\, \mathrm{Dep}(i, j) \;=\; \mathrm{AT}_i \mid \mathrm{RI}_i \mid \mathrm{RT}_i \mid \mathrm{AT}_j \mid \mathrm{RI}_j \mid \mathrm{RT}_j \,\}$$

where Dep(i,j) corresponds to a dependency or link $<< AT_i,\, RI_i{:}\, RT_i >,\, < AT_j,\, RI_j{:}\, RT_j >>$.

For undirected dependencies, a pair of symmetric dependencies Dep(i,j) and Dep(j,i) is used, while for directed dependencies, only the dependency or link corresponding to this specific direction is used. A non-limiting example of undirected alarm dependencies comprises correlations, while a non-limiting example of directed dependencies comprises causal relationships between alarms.

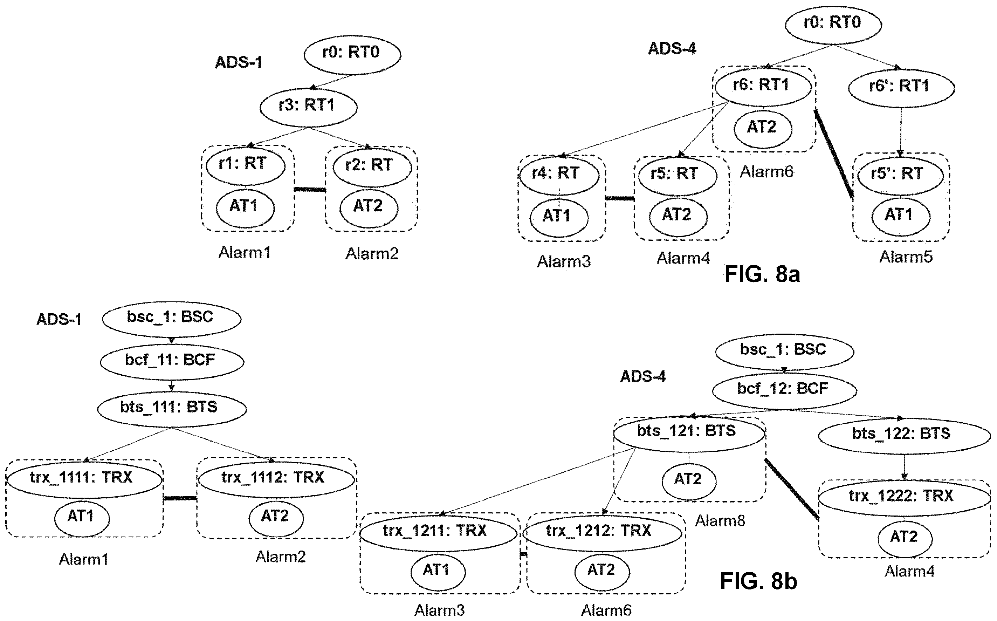

In a preliminary step, the ADS graphs are translated into this tabular representation. This is optional in the sense that the graphs may already be available in this format. FIG. 8a represents two exemplary ADS graphs which will be considered in the detailed description of the role of module/functional blocks shown in FIG. 1. FIG. 8b shows the graphs of FIG. 8a when in the context of the exemplary communication network of FIG. 2. The two ADS graphs ADS-1 and ADS-4 shown on FIG. 8a can respectively be coded as follows:

ADS-1 tabular representation:

"AT1|r1|RT|AT2|r2|RT"
"AT2|r2|RT|AT1|r1|RT"

ADS-4 tabular representation:

"AT1|r4|RT|AT2|r5|RT"
"AT2|r5|RT|AT1|r4|RT"
"AT1|r5'|RT|AT2|r6|RT1"
"AT2|r6|RT1|AT1|r5'|RT"

Other representations than the tabular format can be devised by the person skilled in the art, even if the tabular format is used as example in the detailed description of the different operations explained below.

Graph visualization may optionally be performed, e.g. to allow an operator such as an expert or system administrator to carry out a first root cause analysis. Given that each Alarm is associated with a resource Instance < $AT_i, RI_j: RT_i$ >, the two graphs TOPO and ADS can be connected into a common graph structure by mapping Alarm nodes in ADS to resource instance nodes in TOPO, and this is the visualization shown in FIG. 8a.

According to an embodiment, the set of alarm dependency structures in the tabular format is the input to the summarization process. The process comprises the steps already mentioned earlier, but applied here to the tabular data format.

S1 - Label (associate / map) each alarm dependency $Dep(i,j) = AT_i|RI_i|RT_i|AT_j|RI_j|RT_j$ by (with / to) the topological context that relates the two resource instances present in its vertices:

$$L_{ij} = \text{Label}(<AT_i, RI_i>, <AT_j, RI_j>) = \text{TOPO\_CONTEXT}(RI_i, RI_j),$$

This will result in a new dependency relationship format, Labelled ADS:

$$LADS = \{\, DepL(i,j) = AT_i \mid RI_i \mid RT_i \mid AT_j \mid RI_j \mid RT_j \mid L_{ij} \,\}$$

S2 - Modify each alarm vertex by replacing the resource instance by its type. In tabular format, this translates in deleting the resource instance columns:

$$AT_i \mid RI_i \mid RT_i \;=> AT_i \mid RT_i,$$

S3 - Merge the resulting identical vertices and edges (including the labels). In tabular format, this correspond to a grouping operation. The resulting object is a Summarized ADS (SADS).

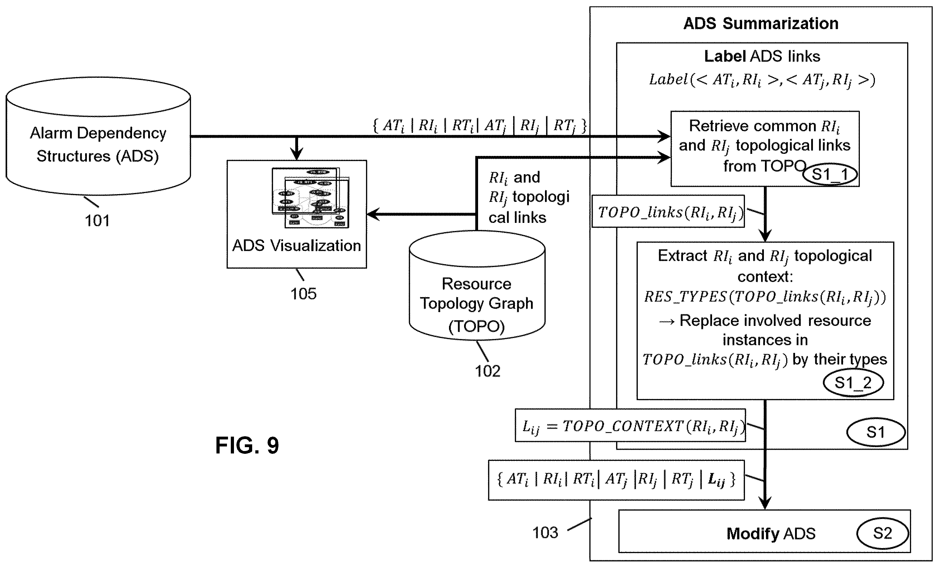

FIG. 9 is a functional block diagram similar to that of FIG. 1 in which only some modules relevant for the ADS visualization and the first step S1 have been kept and in which the first step S1 'Label ADS links' is detailed. For each ADS dependency relationship $Dep(i, j)$, fetched from the ADS database or received from a stream, the topological links $TOPO\_links(RI_i, RI_j)$ connecting involved resource instances $RI_i$ and $RI_j$ are retrieved from the Resource Topology Graph (TOPO) in a sub-step S1_1. As non-limiting examples, in hierarchical topologies (tree structures), $TOPO\_links(RI_i, RI_j)$ can correspond to the longest common prefix in terms of resource instances leading from the root node to each of the resource instances $RI_i$ and $RI_j$. Similarly, for flat connectivity topologies, $TOPO\_links(RI_i, RI_j)$ can determine the shortest path between the two resource instances $RI_i$ and $RI_j$.

The output of sub-step S1_1 will be processed at sub-step S1_2 in FIG. 9, to replace the involved resource instances by their types and generate the desired label $L_{ij}$ = *TOPO_CONTEXT*($RI_i$, $RI_j$). Note that without loss of generality, in case of hierarchical topologies, step S1_2 can keep only the resource type of the last term of the prefix determined at sub-step S1_1. The ADS dependency relationship will be afterwards enriched with the generated label $L_{ij}$ as follows:

$$DepL(i,j) = AT_i \mid RI_i \mid RT_i \mid AT_j \mid RI_j \mid RT_j \mid L_{ij}$$

Taking the example of ADS-1 and ADS-4, these are labelled as follows with their topological contexts:
Labelling the first dependency relationship of ADS-1:

- Applying S1_1:

$$TOPO\_links(r1, r2) = r0:RT0/r3:RT1,$$

corresponding to the longest common prefix from r0 to r1 and r2 in the tree structure.
- Applying S1_2:

$$TOPO\_CONTEXT(r1, r2) = RES\_TYPES(TOPO\_links(r1, r2)) = RT0/RT1 = RT1.$$

In the frame of the present embodiment, the variant according to which only the last term of the prefix RT0/RT1 is kept is applied, i.e. RT0/RT1 is reduced to RT1, since we are dealing with hierarchical topologies.
The following label is obtained: $L_{12}$ = TOPO_CONTEXT(r1, r2) = RT1

Labelling the second dependency relationship of ADS-1:
The application of steps S1_1 and S1_2 will result in the following label:

$L_{21}$ = TOPO_CONTEXT(r2, r1) = RES_TYPES(TOPO_links(r2, r1)) = RES_TYPES(r0:RT0/r3:RT1)=RT0/RT1=RT1 The following labelled ADS-1 dependencies are obtained (the last term on each line is the label):

AT1|r1|RT|AT2|r2|RT|**RT1**
AT2|r2|RT|AT1|r1|RT|**RT1**

Labelling ADS-4 dependency relationships:
Similarly, applying steps S1_1 and S1_2 on ADS-4 will result in the following labelled dependency relationships (the last term on each line is the label):

AT1|r4|RT|AT2|r5|RT|**RT1**
AT2|r5|RT|AT1|r4|RT|**RT1**
AT1|r5'|RT|AT2|r6|RT1|**RT0**
AT2|r6|RT1|AT1|r5'|RT|**RT0**

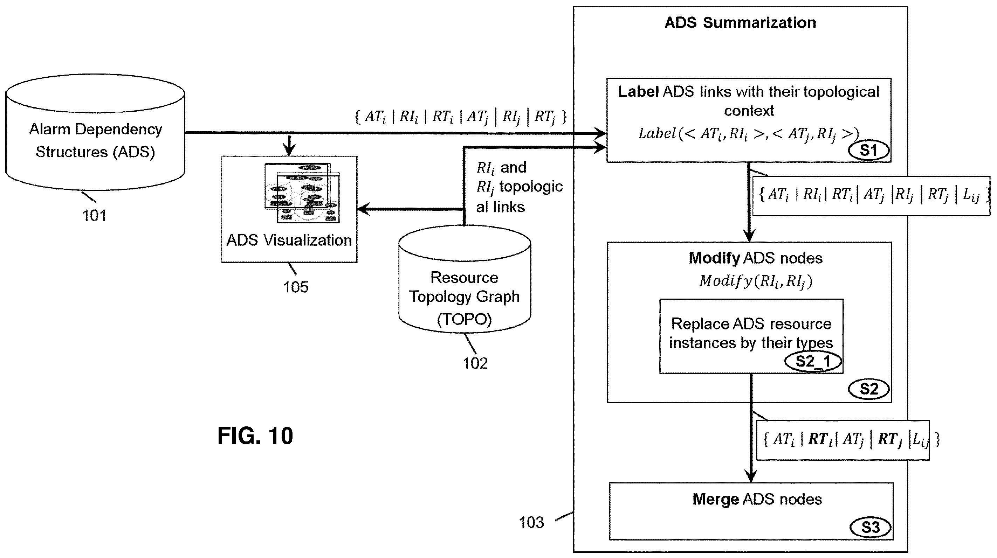

FIG. 10 is a functional block diagram similar to that of FIG. 1 in which only some modules relevant for the second step S2 have been kept and in which this second step S2 'Modify ADS nodes' is detailed. In a sub-step S2_1, for each ADS dependency relationship, enriched with $L_{ij}$ label at the previous step, the involved resource instances $RI_i$ and $RI_j$ are removed and only their types $RT_i$ and $RT_j$ are kept. The output of this operation will be the modified ADS dependency relationships of the following format:

$$DepLM(i,j) = AT_i \mid RT_i \mid AT_j \mid RT_j \mid L_{ij}$$

Applying this to the graphs ADS-1 and ADS-4 of FIG. 8a taken as examples:

- Modified Labelled ADS-1:

$$\text{AT1} \mid \text{RT} \mid \text{AT2} \mid \text{RT} \mid \text{RT1} \quad (1)$$

$$\text{AT2} \mid \text{RT} \mid \text{AT1} \mid \text{RT} \mid \text{RT1} \quad (2)$$

- Modified Labelled ADS-4:

$$\text{AT1} \mid \text{RT} \mid \text{AT2} \mid \text{RT} \mid \text{RT1} \quad (3)$$

$$\text{AT2} \mid \text{RT} \mid \text{AT1} \mid \text{RT} \mid \text{RT1} \quad (4)$$

$$\text{AT1} \mid \text{RT} \mid \text{AT2} \mid \text{RT1} \mid \text{RT0} \quad (5)$$

$$\text{AT2} \mid \text{RT1} \mid \text{AT1} \mid \text{RT} \mid \text{RT0} \quad (6)$$

It is to be noted that dependencies (1) and (3), respectively dependencies (2) and (4) are identical, i.e. occur twice.

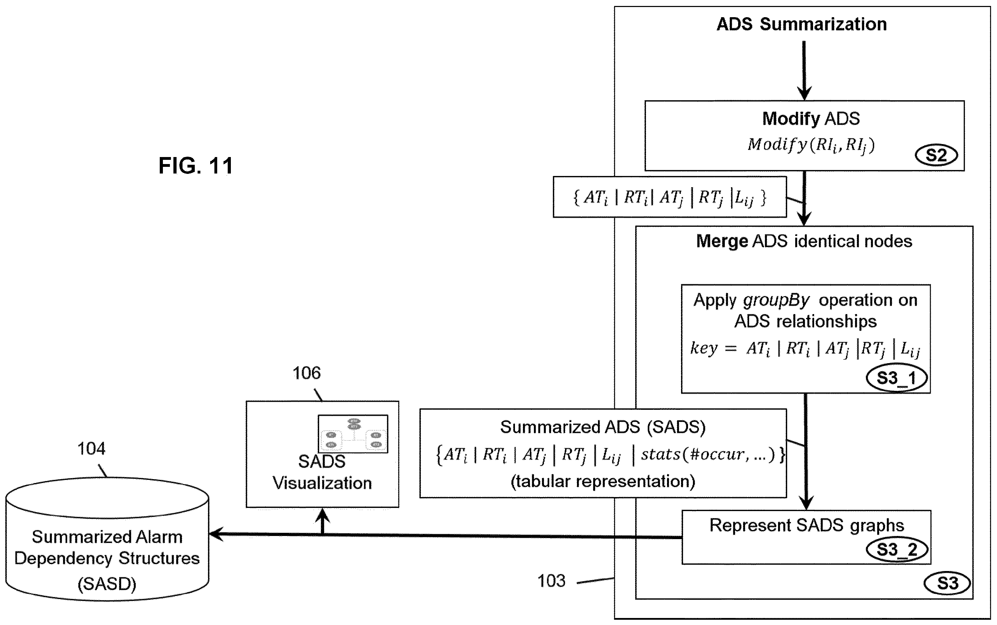

FIG. 11 is a functional block diagram similar to that of FIG. 1 in which only some modules relevant for the third step S3 have been kept and in which this third step S3 'Merge identical ADS nodes' is detailed. In a sub-step S3_1, the alarm dependency relationships in each ADS are grouped using a composed key including the alarm types $AT_i$ and $AT_j$, the resource types $RT_i$ and $RT_j$, and the common topological context $L_{ij}$.

A summarized graph can then be generated. The set of summarized dependencies generated from an ADS constitutes what is called herein a summarized alarm dependency structure (SADS).

Optionally, metadata is added to nodes and/or edges of the SADS. This metadata can result from an aggregation of metadata present in nodes and/or edges of the initial ADS graphs, or generated separately. The metadata can have a numerical and/or textual format or another format. It can for example reflect application specific information such as a correlation degree and/or a statistical confidence measure for edges. With regard to separately generated metadata, certain statistics can for example be added to grouped dependencies sharing a same key. One such statistic that may be added is for example the number of occurrences of a dependency, e.g. to weigh dependencies differently. Other statistics may comprise an average correlation degree, a corresponding statistical confidence, histograms and/or other statistical moments.

The output of sub-step 3_1 is as follows, using the tabular format:

$$\text{DepLMM}(i, j) = AT_i \mid RT_i \mid AT_j \mid RT_j \mid L_{ij} \mid \text{stats}(\#\text{occur}, \dots)$$

which can be also represented as:

$$AT_i \mid RT_i \xrightarrow{\quad L_{ij} \quad} AT_j \mid RT_j \quad [\text{stats}(\#\text{occur}, \dots)]$$

Applying this sub-step to the graphs ADS-1 and ADS-4 of FIG. 8a taken as examples, i.e. summarizing the modified labelled ADS-1 and ADS-4 dependencies, obtained at the last step, the following SADS-4 is generated (represented in tabular format):

- Merger of the modified labelled ADS-1 and the first two dependencies of ADS-4:

$$DepLMM(1,2) = \text{AT1} \mid \text{RT} \mid \text{AT2} \mid \text{RT} \mid \text{RT1} \mid \text{stats}(2, \dots)$$

$$DepLMM(2,1) = \text{AT2} \mid \text{RT} \mid \text{AT1} \mid \text{RT} \mid \text{RT1} \mid \text{stats}(2, \dots)$$

- Summarizing the last two modified labelled dependencies of ADS-4:

$$DepLMM(1,3) = \text{AT1} \mid \text{RT} \mid \text{AT2} \mid \text{RT1} \mid \text{RT0} \mid \text{stats}(1, \dots)$$

$$DepLMM(3,1) = AT2 \mid RT1 \mid AT1 \mid RT \mid RT0 \mid stats(1, \ldots)$$

The summarized graph will be referred to as SADS-4 in what follows.

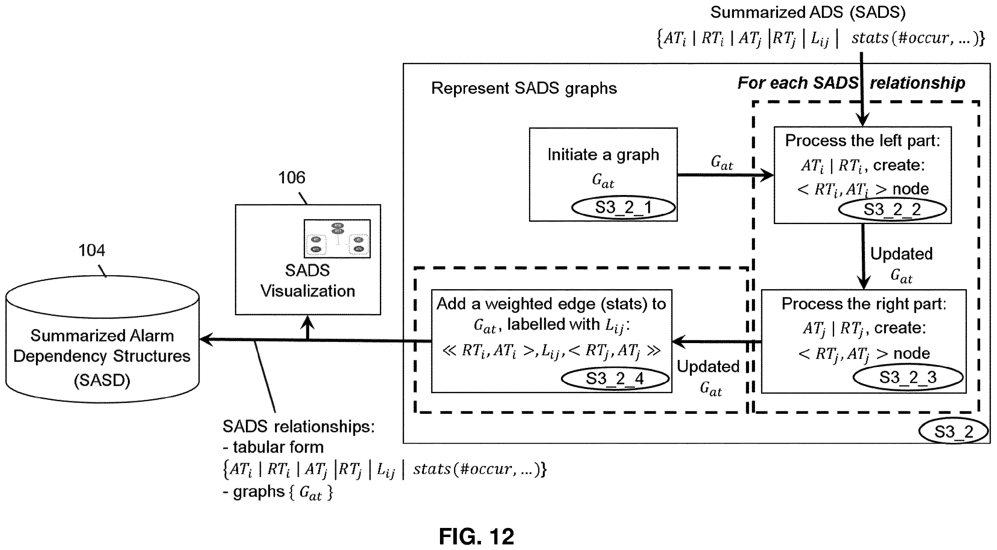

FIG. 12 is a functional block diagram similar to that of FIG. 11 in which only some modules relevant for sub-step S3_2 have been kept and in which this sub-step S3_2 'Represent SADS graphs' is detailed.

Summarizing the alarm dependency structures as described above comprises grouping the nodes, and consequently the edges including the topological context labels, by their resource and alarm types. This produces a new type of graph, the Summarized ADS or 'SADS' which is received as input to the graph representation module S3_2.

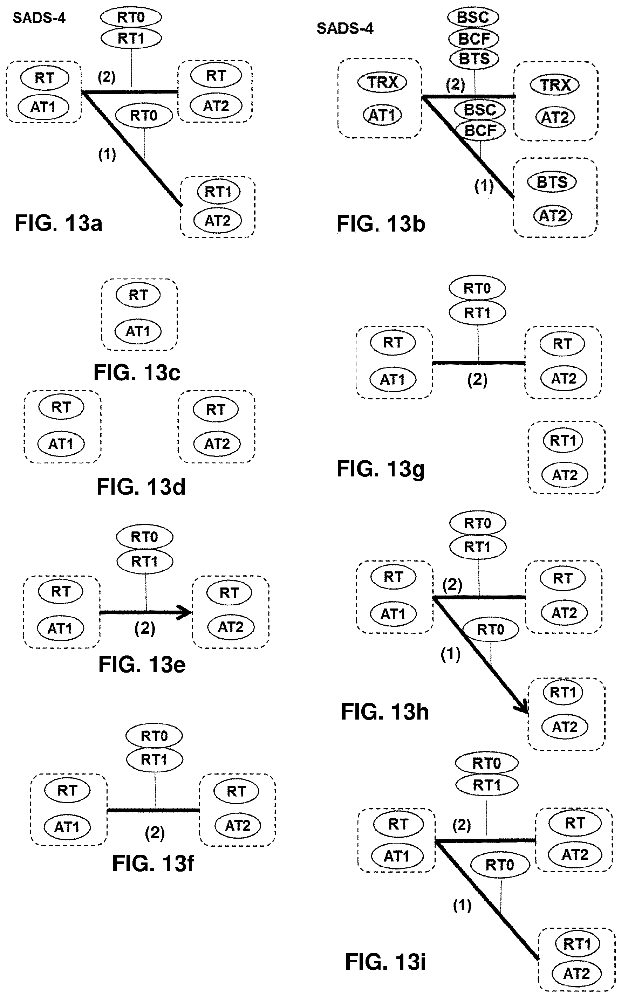

FIG. 13a is a representation of the graph SADS-4 based on the summarization of the graphs ADS-1 and ADS-4 of FIG. 8a and using generic Alarm types and resource types, whereas FIG. 13b is a representation of SADS-4 in the context of the cellular communication network of FIG. 2, i.e. based on the graphs illustrated in FIG. 8b. In both FIG. 13a and FIG. 13b, the occurrences of each dependency are indicated in parentheses.

Coming back to FIG. 12, graph $G_{at} = (N_{at}, E_{at})$ is a graph describing the resource and alarm types dependencies SADS, where:

- $N_{at}$ = {*nodes:* representing all the resource and alarm type associations $< AT_i, RT_i >$},
- $E_{at}$ = {*edges:* dependency relationships in terms of types $<< AT_i, RT_i >, L_{ij}, < AT_j, RT_j >>$ }.

According to an embodiment, the SADS in tabular format, generated in the previous step, is used to derive the graph representation $G_{at}$ as follows. Reference will be made to FIG. 13c to 13i, which represent the graphs at different stages of the representation construction. For conciseness, the graphs of FIG. 13c to 13i are only represented in their generalized format, not in the context of the communication network of FIG. 2.

1. Initiate an empty graph $G_{at}$ (Step S3_2_1 in FIG. 12),
2. Process each SADS summarized dependency relationship *DepLMM(i,j)* sequentially, while applying the following operations:

   a. Extract the left part ($AT_i|RT_i$) of current relationship *DepLMM(i, j)* and create the corresponding node in $G_{at}$ graph, unless this node has already been created, using $RT_i$ and $AT_i$ (Step S3_2_2 in FIG. 12).
   As an example, processing the left part of SADS-4 *DepLMM(1,2)* will result in the node shown in FIG. 13c.
   b. Extract the right part ($AT_j \mid RT_j$) of current SADS summarized dependency *DepLMM(i, j)* and create the corresponding node in $G_{at}$ graph, unless this node has already been created, using $RT_j$ and $AT_j$ (Step S3_2_3 in FIG. 12),
   As an example, processing the right part of the previous SADS-4 *DepLMM(1,2)* will result in the graph shown in FIG. 13d.
   c. Generate an edge between $< RT_i, AT_i >$ and $< RT_j, AT_j >$ nodes, labelled with $L_{ij}$, and possibly weighted with the summarized statistics (e.g. the number of occurrences #occur) (Step S3_2_4 in FIG. 12).
   As an example, processing $L_{ij}$ of the previous SADS-4 *DepLMM(1,2)* will result in the graph of FIG. 13e. Note that this results in a directed edge, since the line that was processed corresponds to a single direction.

Then, processing the next summarized dependency relationship of SADS-4 *DepLMM(2,1)* will transform the directed edge $<< RT,AT1 >, RT1, < RT,AT2 >>$ into a non-directed edge (symmetric summarized relationship), as shown in FIG. 13f.

Processing the next summarized dependency relationship of SADS-4 *DepLMM(1,3)* and applying step 2a will result in no change compared to the previous graph of FIG. 13f, since the left-hand node of the expression already exists. Applying step 2b adds a third node corresponding to the right-hand node of the expression as illustrated by FIG. 13g and lastly applying step 2c adds an edge associated with the topological information 'RT0' as illustrated by FIG. 13h.

Finally, processing the next summarized dependency relationship of SADS-*4 DepLMM(3,1)* will transform the directed edge $<< RT,AT1 >, RT0, < RT1,AT2 >>$ into a non-directed edge, because of the symmetric summarized relationship, resulting in the graph of FIG. 13i. The edge $<< RT,AT1 >, RT1, < RT, AT2 >>$ edge has a greater weight than $<< RT, AT1 >, RT0, < RT1,AT2 >>$ (2 occurrences instead of 1).

The result of applying the summarization to a set of ADS is a set of unique summarized graphs (outputs of S3_2 on FIG. 12) which represent reusable alarm propagation scenarios and which can be instantiated in multiple similar (but not exactly the same, non-isomorphic) topological contexts. In other words, the summarization of graphs is a normal form representation which enables identifying the same alarm propagation patterns in different datasets.

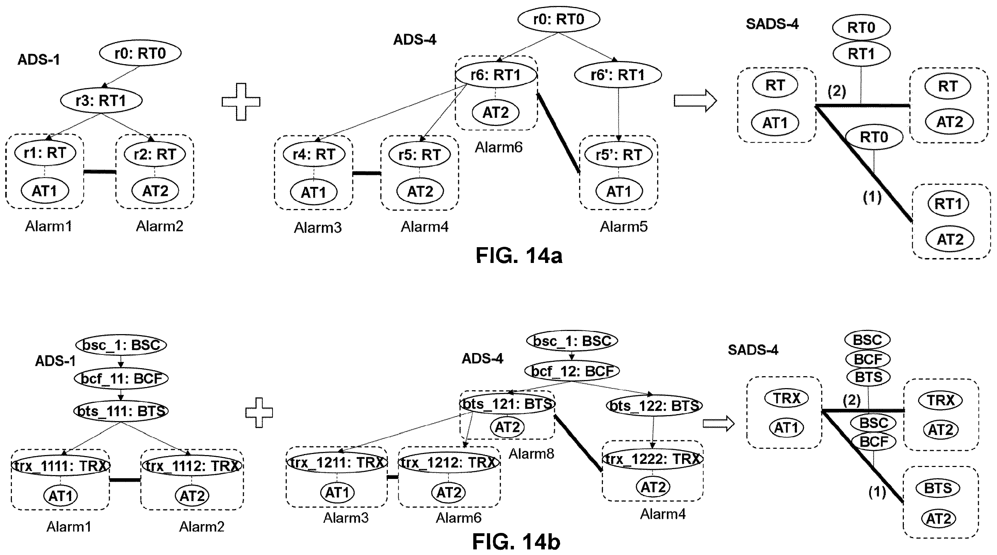

The summarized ADS may be visualized as shown in FIG. 14a (and FIG. 14b when considering the context of the network of FIG. 2) using the visualization module 106 as shown e.g. in FIG. 1 and FIG. 12, so as to be examined by an expert and/or system administrator. In FIG. 14, both the original ADS (here ADS-1 and ADS-4) and the summarized ADS (here SADS-4) are shown jointly, allowing to navigate back and forth between the two. This gives the possibility of viewing the ADS that were summarized into one or more SADS and vice-versa.

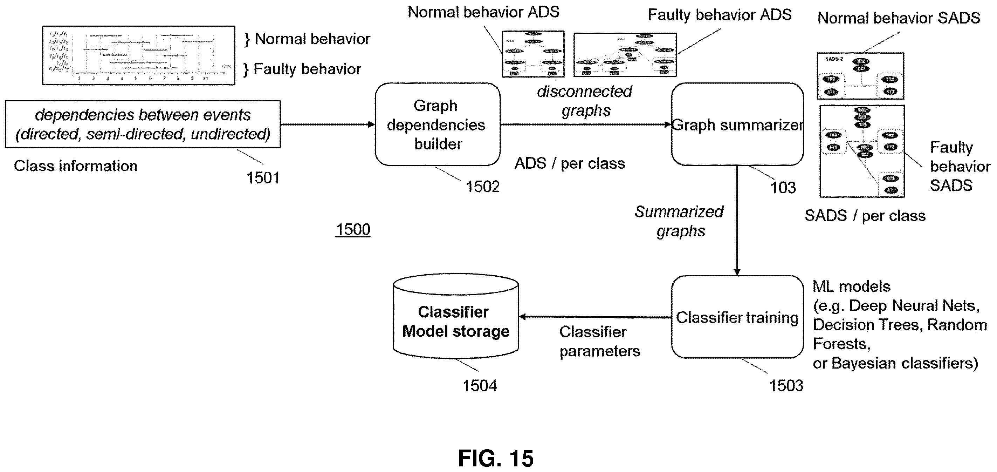

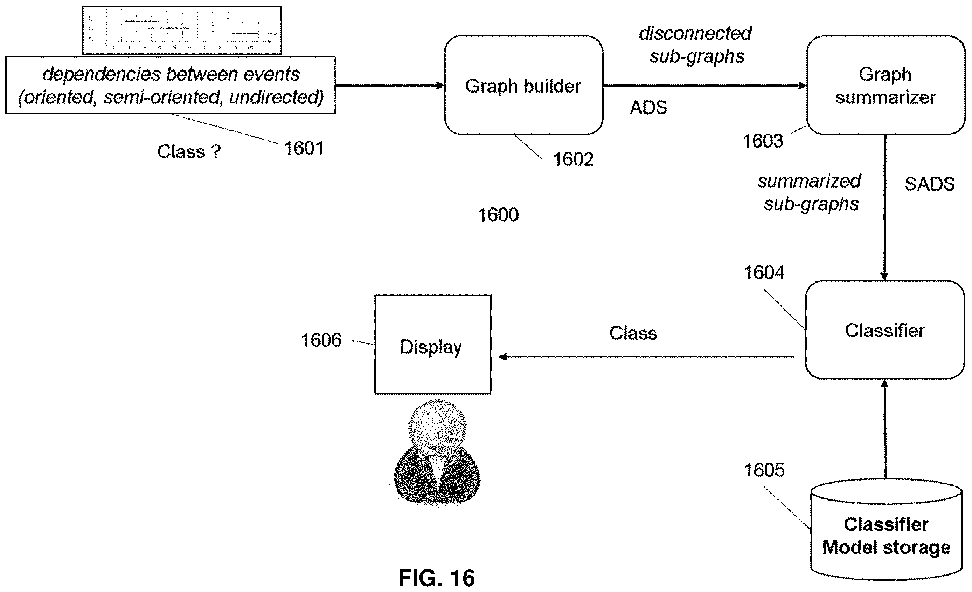

According to a non-limiting embodiment, the summarized alarm dependency structures described above are applied to the identification of fault and normal behaviors for classifying new alarm propagation scenarios as faulty or normal. This application will be described in conjunction with FIG. 15, which is a functional block diagram of a non-limiting embodiment of a classifier training architecture and FIG. 16, which is a functional block diagram of a non-limiting embodiment of an architecture using a previously trained classifier to classify new alarm logs. While the functional blocks of each architecture are presented separately, the functions corresponding to an architecture may be carried out by a single device or shared among several devices. Also, one or more functions of the classifier training architecture and functions of the log classification architecture may be combined in a same device.

The application starts by training a classifier to distinguish between different fault classes and normal behaviors as shown in FIG. 15. For this purpose, the classifier training architecture comprises an event dependency source 1501 - this may be an interface receiving a data stream, or a storage medium comprising a set of data. According to the present embodiment, the source provides a set of labelled alarm logs where the label indicates the class to which the log belongs e.g. "normal behavior" or the type of fault represented by the alarms. A graph dependency builder 1502 then creates an ADS graph, associated with its class, and that will feed the graph summarizer 103. The graph summarizer will produce a summarized ADS, SADS, as previously explained, again associated with a class, the resulting summarized alarm dependencies serving as inputs to the classifier training, at module 1503. Note that while simple examples of ADS graphs have been described, an ADS graph may comprise more than a single sub-graph, i.e. a plurality of disconnected sub-graphs. Similarly, a resulting SADS may comprise one or more sub-graphs. According to one variant embodiment, one or more alarm logs may be used to generate a single ADS. According to another variant embodiment, a single alarm log is used to generate an ADS. Classification algorithms per se will not be detailed here - some examples of applicable classifiers include various ML models such as Deep Neural Nets, Decision Trees, Random Forests, or Bayesian classifiers. Trained classifier models are stored in a classifier model storage module for later use.

Once the classifier is trained, new logs can be classified into one of the classes used during the training step as shown in FIG. 16. The classifier assigns each unlabeled log to the most appropriate class according to the model built using the samples labelled with a class. The architecture of FIG. 16 comprises an event dependency source 1601, generating event or alarm logs for which a class is to be determined. A graph builder 1602 uses the logs to build an alarm dependency graph ADS, which is then summarized by summarizer module 1603. Summarizer module 1603 is similar to the summarizer module 103 described above. The output SADS of summarizer 1603 is fed to a classifier 1604, using which applies models resulting from prior training and available from storage module 1605. The resulting class is then provided to a user, e.g. on a display 1606, possibly along the ADS and the SADS graph representations.

The output the summarization process can be used as input of a classifier because it captures invariant patterns of event dependencies. In other words, the same phenomenon appearing in two different but similar network contexts (having different instance alarm dependency graphs) will have a similar summarized alarm dependency graph, and this similarity will be used by the classifier to assign the two summarized alarm dependency graphs to a same class. The methods described herein enables obtaining normalized - and hence comparable - representations through generalization of event logs collected from different application contexts and different instantiations.

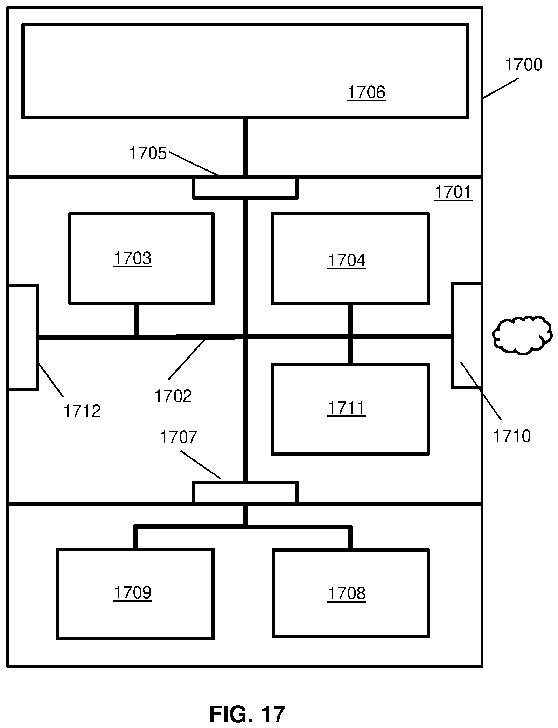

FIG. 17 is a block diagram of a device 1700 that, according to an exemplary embodiment, can be used to implement any one or more of the functional blocks presented in FIG. 1, FIG. 9 to 12, FIG. 15 and/or FIG. 16 and to carry out partially or fully the methods described herein. The device 1700 comprises a printed circuit board 1701 on which a communication bus 1702 connects a processor 1703, a random access memory 1704, a storage medium 1711, an interface 1705 for connecting a display 1706, a series of connectors 1707 for connecting user interface devices or modules such as a mouse or trackpad 1708 and a keyboard 1709, a wireless network interface 1710 and a wired network interface 1712. Depending on the functionality required, the device may implement only part of the above. Certain modules of the device 1700 may be internal or connected externally, in which case they do not necessarily form integral part of the device itself. E.g. display 1706 may be a display that is connected to a device only under specific circumstances, or the device may be controlled through another device with a display, i.e. no specific display 1706 and interface 1705 are then required for device 1700. Storage medium 1711 contains software code which, when executed by processor 1703, causes the device to carry out the methods described herein.

**Claims**

1.   A data processing device (1700) for providing training data to a classifier for monitoring a network of resource instances, said classifier providing a network state class, wherein resource instances are organized according to a topology, resource instances having respective resource types defining a resource category, at least part of the resource instances generating alarms, alarms having respective alarm types defining alarm categories, comprising:

- means (1501, 1502) for obtaining an alarm dependency structure, ADS, (400) comprising dependencies (401) between alarms, wherein an alarm of said ADS is associated with the resource instance which generated it and with its alarm type, said ADS being associated with a network state class;
- means for assigning (103, S1) topological information to a given dependency, said topological information being function of a link, within the topology, of the resource instances associated with the alarms linked by said given dependency;
- means for replacing (103, S2) respective resource instances associated with alarms by their respective resource types;
- means for merging (103, S3) a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm type of the second pair and (c) if the topological information of the first dependency and of the second dependency is identical;
- means (103) for providing training data for classifier training (1503), said training data comprising said network state class and a summarized alarm dependency structure, SADS, resulting from said assigning, replacing and merging.

2. The device of claim 1, wherein said means (1501, 1502) for obtaining a first alarm dependency structure are further configured to obtain the dependencies of said first alarm dependency structure from an analysis of correlations and/or causal relationships of events in an alarm log.

3. The device according to one of the preceding claims, wherein the topology comprises resources instances of said network and physical and/or virtual and/or logical connections between said network resources.

4. The device according to one of the preceding claims, wherein said topological information comprises, for hierarchical network topologies, one of:

- the resource type sequence of the longest common resource instance sequence (601) obtained by matching resource instance sequences leading from a root node of said hierarchical topology to the resource instances of alarms linked by a dependency; or
- the last common term closest to the resource instances of the resource type sequence of the longest common resource instance sequence obtained by matching resource instance sequences leading from a root node of said hierarchical topology to the resource instances of alarms linked by a dependency, in case said last term of the longest common resource type sequence allows to deterministically determine said type sequence from the root.

5. The device according to one of the claims 1 to 3, wherein said topological information comprises, for flat network topologies, the shortest common resource type sequence between two resource instances of alarms linked by a dependency.

6. The device according to one of the preceding claims, wherein said assigning, replacing and merging means are further configured to process a plurality of alarm dependency structures (400) to obtain a single summarized alarm dependency structure (600).

7. The device according to one of the preceding claims, wherein said class is one among one or more normal behavior states and one or more faulty behavior states.

8. The device according to one of the preceding claims, wherein said training means are further configured to train a classifier with a plurality of summarized alarm dependency structures associated with at least one class.

9. The device according to one of the preceding claims, further comprising

- means (105) for visualizing said alarm dependency structure in the form of a graph in which dependencies are shown as edges linking vertices, wherein a vertex representation comprises a resource instance and a corresponding resource type, and an alarm type for resource instances which generated an alarm; and
- means (106) for visualizing said summarized alarm dependency structure in the form of a graph in which dependencies are shown as edges linking vertices, wherein dependencies are represented with their associated topology information and wherein a vertex representation comprises a resource type and an alarm type.

10. The device according to one of the preceding claims, wherein said means for merging are further configured to aggregate metadata associated with at least part of a plurality of dependencies of said alarm dependency structure being merged into one dependency, to form metadata of the one dependency resulting from the merging.

11. A data processing device (1700) for monitoring a network of resource instances wherein resource instances are organized according to a topology, resource instances having respective resource types defining a resource category, at least part of the resource instances generating alarms, alarms having respective alarm types defining alarm categories, comprising:

- means (1601, 1602) for obtaining a second alarm dependency structure, ADS, (400) for which a network state class is to be determined, said ADS comprising dependencies (401) between alarms, wherein an alarm of said ADS is associated with the resource instance which generated it and with its alarm type;
- means for assigning (1603) topological information to a given dependency, said topological information being function of a link, within the topology, of the resource instances associated with the alarms linked by said given dependency;
- means for replacing (1603) respective resource instances associated with alarms by their respective resource types;
- means for merging (1603) a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm type of the second pair and (c) if the topological information of the first dependency and of the second dependency is identical, and for providing a summarized alarm dependency structure, SADS, resulting from said assigning, replacing and merging, to classifier means (1604);
- classifier means (1604) for providing a network state class as a function of said SADS; wherein said classifier means use a classifier model obtained from prior training based on at least one summarized alarm dependency structure and an associated known network state class; wherein the classifier model was previously trained using training data obtained by applying a method according to claim 12.

12. A method carried out by a data processing device (1700) for providing training data to a classifier for monitoring a network of resource instances, said classifier providing a network state class for an alarm dependency structure, wherein resource instances are organized according to a topology, resource instances having respective resource types defining a resource category, at least part of the resource instances generating alarms, alarms having respective alarm types defining alarm categories, comprising:

- obtaining an alarm dependency structure, ADS, (400) comprising dependencies (401) between alarms, wherein an alarm of said ADS is associated with the resource instance which generated it and with its alarm type, said ADS being associated with a network state class;
- assigning (S1) topological information to a given dependency, said topological information being function of a link, within the topology, of the resource instances associated with the alarms linked by said given dependency;
- replacing (S2) respective resource instances associated with alarms by their respective resource types;
- merging (S3) a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm type of the second pair and (c) if the topological information of the first dependency and of the second dependency is identical;
- providing said network state class and a summarized alarm dependency structure, SADS, resulting from said assigning, replacing and merging, for classifier training.

13. A method carried out by a data processing device (1700) for monitoring a network of resource instances wherein resource instances are organized according to a topology, resource instances having respective resource types defining a resource category, at least part of the resource instances generating alarms, alarms having respective alarm types defining alarm categories, comprising:

- obtaining an alarm dependency structure, ADS, (400) for which a network state class is to be determined, said ADS comprising dependencies (401) between alarms, wherein an alarm of said ADS is associated with the resource instance which generated it and with its alarm type;
- assigning (S1) topological information to a given dependency, said topological information being function of a link, within the topology, of the resource instances associated with the alarms linked by said given dependency;
- replacing (S2) respective resource instances associated with alarms by their respective resource types;
- merging (S3) a first pair of resource types and associated alarm types linked by a first dependency and a second pair of resource types and associated alarm types linked by a second dependency if (a) a first resource type and its associated alarm type of the first pair are identical to a first resource type and associated alarm type of the second pair and (b) a second resource type and its associated alarm type of the first pair are identical to a second resource type and associated alarm type of the second pair and (c) if the topological information of the first dependency and of the second dependency is identical;
- providing a summarized alarm dependency structure, SADS, resulting from said assigning, replacing and merging, to a classifier;
- obtaining a network state class as a function of said SADS using a classifier means use a classifier model obtained from prior training based on at least one summarized alarm dependency structure and an associated known network state class; wherein the classifier model was previously trained using training data obtained by applying a method according to claim 12.

**Patentansprüche**

1. Datenverarbeitungsvorrichtung (1700) zum Bereitstellen von Trainingsdaten für einen Klassifizierer zum Überwachen eines Netzwerks von Ressourceninstanzen, wobei der Klassifizierer eine Netzwerkzustandsklasse bereitstellt, wobei Ressourceninstanzen gemäß einer Topologie organisiert sind, wobei Ressourceninstanzen jeweilige Ressourcenarten aufweisen, die eine Ressourcenkategorie definieren, wobei mindestens ein Teil der Ressourceninstanzen Alarme erzeugt, wobei Alarme jeweilige Alarmarten aufweisen, die Alarmkategorien definieren, die Folgendes umfasst:

- Mittel (1501, 1502) zum Erhalten einer Alarmabhängigkeitsstruktur, ADS, (400), die Abhängigkeiten (401) zwischen Alarmen umfasst, wobei ein Alarm der ADS mit der Ressourceninstanz, die ihn erzeugt hat, und mit deren Alarmart verknüpft ist, wobei die ADS mit einer Netzwerkzustandsklasse verknüpft ist;
- Mittel zum Zuweisen (103, S1) von topologischen Informationen zu einer gegebenen Abhängigkeit, wobei die topologischen Informationen eine Funktion eines Links innerhalb der Topologie der Ressourceninstanzen ist, die mit den Alarmen verknüpft sind, die durch die gegebene Abhängigkeit verlinkt sind;
- Mittel zum Ersetzen (103, S2) von jeweiligen Ressourceninstanzen, die mit Alarmen verknüpft sind, durch ihre jeweiligen Ressourcenarten;
- Mittel zum Zusammenführen (103, S3) eines ersten Paares von Ressourcenarten und verknüpften Alarmarten, die durch eine erste Abhängigkeit verlinkt sind, und eines zweiten Paares von Ressourcenarten und verknüpften Alarmarten, die durch eine zweite Abhängigkeit verlinkt sind, wenn (a) eine erste Ressourcenart und deren verknüpfte Alarmart des ersten Paares mit einer ersten Ressourceart und einer verknüpften Alarmart des zweiten Paares identisch sind und (b) eine zweite Ressourcenart und deren verknüpfte Alarmart des ersten Paares mit einer zweiten Ressourcenart und einer verknüpften Alarmart des zweiten Paares identisch sind und (c) wenn die topologischen Informationen der ersten Abhängigkeit und der zweiten Abhängigkeit identisch sind;
- Mittel (103) zum Bereitstellen von Trainingsdaten für ein Klassifizierertraining (1503), wobei die Trainingsdaten die Netzwerkzustandsklasse und eine summierte Alarmabhängigkeitsstruktur, SADS, umfassen, die aus dem Zuweisen, Ersetzen und Zusammenführen resultiert.

2. Vorrichtung nach Anspruch 1, wobei die Mittel (1501, 1502) zum Erhalten einer ersten Alarmabhängigkeitsstruktur ferner dazu ausgelegt sind, die Abhängigkeiten der ersten Alarmabhängigkeitsstruktur von einer Analyse von Korrelationen und/oder kausalen Beziehungen von Ereignissen in einem Alarmprotokoll zu erhalten.

3. Vorrichtung nach einem der vorhergehenden Ansprüche, wobei die Topologie Ressourceninstanzen des Netzwerks und physische und/oder virtuelle und/oder logische Verbindungen zwischen den Netzwerkressourcen umfasst.

4. Vorrichtung nach einem der vorhergehenden Ansprüche, wobei die topologischen Informationen für hierarchische Netzwerktopologien eines von Folgendem umfassen:

- die Ressourcenartsequenz der längsten gemeinsamen Ressourceninstanzsequenz (601), die durch Abgleichen von Ressourceninstanzsequenzen, die von einem Wurzelknoten der hierarchischen Topologie wegführen, mit den Ressourceninstanzen von Alarmen, die durch eine Abhängigkeit verlinkt sind, erhalten wird; oder
- den letzten gemeinsamen Term, der den Ressourcenartsequenzen der längsten gemeinsamen Ressourceninstanzsequenz, die durch Abgleichen von Ressourceninstanzsequenzen, die von einem Wurzelknoten der hierarchischen Topologie wegführen, mit den Ressourceninstanzen von Alarmen, die durch eine Abhängigkeit verlinkt sind, erhalten werden, in dem Fall am nächsten ist, in dem der letzte Term der längsten gemeinsamen Ressourcenartsequenz es erlaubt, die Artsequenz von der Wurzel deterministisches zu bestimmen.

5. Vorrichtung nach einem der Ansprüche 1 bis 3, wobei die topologischen Informationen für flache Netzwerktopologien die kürzeste gemeinsame Ressourcenartsequenz zwischen zwei Ressourceninstanzen von Alarmen, die durch eine Abhängigkeit verlinkt sind, umfassen.

6. Vorrichtung nach einem der vorhergehenden Ansprüche, wobei die Mittel zum Zuweisen, Ersetzen und Zusammenführen ferner dazu ausgelegt sind, eine Vielzahl von Alarmabhängigkeitsstrukturen (400) zu verarbeiten, um eine einzelne summierte Alarmabhängigkeitsstruktur (600) zu erhalten.

7. Vorrichtung nach einem der vorhergehenden Ansprüche, wobei die Klasse einer von einem oder mehreren normalen Verhaltenszuständen und einem oder mehreren fehlerhaften Verhaltenszuständen ist.

8. Vorrichtung nach einem der vorhergehenden Ansprüche, wobei die Trainingsmittel ferner dazu ausgelegt sind, einen Klassifizierer mit einer Vielzahl von summierten Alarmabhängigkeitsstrukturen zu trainieren, die mit mindestens einer Klasse verknüpft sind.

9. Vorrichtung nach einem der vorhergehenden Ansprüche, die ferner Folgendes umfasst

   - Mittel (105) zum Visualisieren der Alarmabhängigkeitsstruktur in der Form eines Graphen, in dem Abhängigkeiten als Kanten gezeigt werden, die Scheitelpunkte verlinken, wobei eine Scheitelpunktrepräsentation eine Ressourceninstanz und eine entsprechende Ressourcenart und eine Alarmart für Ressourceninstanzen, die einen Alarm erzeugt haben, umfasst; und
   - Mittel (106) zum Visualisieren der summierten Alarmabhängigkeitsstruktur in der Form eines Graphen, in dem Abhängigkeiten als Kanten gezeigt werden, die Scheitelpunkte verlinken, wobei Abhängigkeiten mit deren verknüpften Topologieinformationen repräsentiert werden und wobei eine Scheitelpunktrepräsentation eine Ressourcenart und eine Alarmart umfasst.

10. Vorrichtung nach einem der vorhergehenden Ansprüche, wobei die Mittel zum Zusammenführen ferner dazu ausgelegt sind, Metadaten zu aggregieren, die mit mindestens einem Teil einer Vielzahl von Abhängigkeiten der Alarmabhängigkeitsstruktur verknüpft sind, die zu einer Abhängigkeit zusammengeführt sind, um aus der einen Abhängigkeit, die aus dem Zusammenführen resultiert, Metadaten zu bilden.

11. Datenverarbeitungsvorrichtung (1700) zum Überwachen eines Netzwerks von Ressourceninstanzen, wobei Ressourceninstanzen gemäß einer Topologie organisiert sind, wobei Ressourceninstanzen jeweilige Ressourcenarten aufweisen, die eine Ressourcenkategorie definieren, wobei mindestens ein Teil der Ressourceninstanzen Alarme erzeugt, wobei Alarme jeweilige Alarmarten aufweisen, die Alarmkategorien definieren, die Folgendes umfasst:

   - Mittel (1601, 1602) zum Erhalten einer zweiten Alarmabhängigkeitsstruktur, ADS, (400), für die eine Netzwerkzustandsklasse zu bestimmen ist, wobei die ADS Abhängigkeiten (401) zwischen Alarmen umfasst, wobei ein Alarm der ADS mit der Ressourceninstanz, die ihn erzeugt hat, und mit deren Alarmart verknüpft ist;
   - Mittel zum Zuweisen (1603) von topologischen Informationen zu einer gegebenen Abhängigkeit, wobei die topologischen Informationen eine Funktion eines Links innerhalb der Topologie der Ressourceninstanzen ist, die mit den Alarmen verknüpft sind, die durch die gegebene Abhängigkeit verlinkt sind;
   - Mittel zum Ersetzen (1603) von jeweiligen Ressourceninstanzen, die mit Alarmen verknüpft sind, durch ihre jeweiligen Ressourcenarten;
   - Mittel zum Zusammenführen (1603) eines ersten Paares von Ressourcenarten und verknüpften Alarmarten, die durch eine erste Abhängigkeit verlinkt sind, und eines zweiten Paares von Ressourcenarten und verknüpften Alarmarten, die durch eine zweite Abhängigkeit verlinkt sind, wenn (a) eine erste Ressourcenart und deren verknüpfte Alarmart des ersten Paares mit einer ersten Ressourcenart und einer verknüpften Alarmart des zweiten Paares identisch sind und (b) eine zweite Ressourcenart und deren verknüpfte Alarmart des ersten Paares mit einer zweiten Ressourcenart und einer verknüpften Alarmart des zweiten Paares identisch sind und (c) wenn die topologischen Informationen der ersten Abhängigkeit und der zweiten Abhängigkeit identisch sind, und zum Bereitstellen einer summierten Alarmabhängigkeitsstruktur, SADS, die aus dem Zuweisen, Ersetzen und Zusammenführen resultieren, für Klassifizierermittel (1604);
- Klassifizierermittel (1604) zum Bereitstellen einer Netzwerkzustandsklasse als eine Funktion der SADS; wobei die Klassifizierermittel ein Klassifizierermodell verwenden, das bei einem vorherigen Training auf Basis von mindestens einer summierten Alarmabhängigkeitsstruktur und einer verknüpften bekannten Netzwerkzustandsklasse erhalten wurde; wobei das Klassifizierermodell zuvor unter Verwendung von Trainingsdaten trainiert wurde, die durch Anwenden eines Verfahrens nach Anspruch 12 erhalten wurden.

12. Verfahren, das von einer Datenverarbeitungsvorrichtung (1700) zum Bereitstellen von Trainingsdaten für einen Klassifizierer zum Überwachen eines Netzwerks von Ressourceninstanzen umgesetzt wird, wobei der Klassifizierer eine Netzwerkzustandsklasse für eine Alarmabhängigkeitsstruktur bereitstellt, wobei Ressourceninstanzen gemäß einer Topologie organisiert sind, wobei Ressourceninstanzen jeweilige Ressourcenarten aufweisen, die eine Ressourcenkategorie definieren, wobei mindestens ein Teil der Ressourceninstanzen Alarme erzeugt, wobei Alarme jeweilige Alarmarten aufweisen, die Alarmkategorien definieren, das Folgendes umfasst:

- Erhalten einer Alarmabhängigkeitsstruktur, ADS, (400), die Abhängigkeiten (401) zwischen Alarmen umfasst, wobei ein Alarm der ADS mit der Ressourceninstanz, die ihn erzeugt hat, und mit deren Alarmart verknüpft ist, wobei die ADS mit einer Netzwerkzustandsklasse verknüpft ist;
- Zuweisen (S1) von topologischen Informationen zu einer gegebenen Abhängigkeit, wobei die topologischen Informationen eine Funktion eines Links innerhalb der Topologie der Ressourceninstanzen ist, die mit den Alarmen verknüpft sind, die durch die gegebene Abhängigkeit verlinkt sind;
- Ersetzen (S2) von jeweiligen Ressourceninstanzen, die mit Alarmen verknüpft sind, durch ihre jeweiligen Ressourcenarten;
- Zusammenführen (S3) eines ersten Paares von Ressourcenarten und verknüpften Alarmarten, die durch eine erste Abhängigkeit verlinkt sind, und eines zweiten Paares von Ressourcenarten und verknüpften Alarmarten, die durch eine zweite Abhängigkeit verlinkt sind, wenn (a) eine erste Ressourcenart und deren verknüpfte Alarmart des ersten Paares mit einer ersten Ressourceart und einer verknüpften Alarmart des zweiten Paares identisch sind und (b) eine zweite Ressourcenart und deren verknüpfte Alarmart des ersten Paares mit einer zweiten Ressourcenart und einer verknüpften Alarmart des zweiten Paares identisch sind und (c) wenn die topologischen Informationen der ersten Abhängigkeit und der zweiten Abhängigkeit identisch sind;
- Bereitstellen der Netzwerkzustandsklasse und einer summierten Alarmabhängigkeitsstruktur, SADS, die aus dem Zuweisen, Ersetzen und Zusammenführen resultiert, für ein Klassifizierertraining.

13. Verfahren, das von einer Datenverarbeitungsvorrichtung (1700) zum Überwachen eines Netzwerks von Ressourceninstanzen umgesetzt wird, wobei Ressourceninstanzen gemäß einer Topologie organisiert sind, wobei Ressourceninstanzen jeweilige Ressourcenarten aufweisen, die eine Ressourcenkategorie definieren, wobei mindestens ein Teil der Ressourceninstanzen Alarme erzeugt, wobei Alarme jeweilige Alarmarten aufweisen, die Alarmkategorien definieren, das Folgendes umfasst:

- Erhalten einer Alarmabhängigkeitsstruktur, ADS, (400), für die eine Netzwerkzustandsklasse zu bestimmen ist, wobei die ADS Abhängigkeiten (401) zwischen Alarmen umfasst, wobei ein Alarm der ADS mit der Ressourceninstanz, die ihn erzeugt hat, und mit deren Alarmart verknüpft ist;
- Zuweisen (S1) von topologischen Informationen zu einer gegebenen Abhängigkeit, wobei die topologischen Informationen eine Funktion eines Links innerhalb der Topologie der Ressourceninstanzen ist, die mit den Alarmen verknüpft sind, die durch die gegebene Abhängigkeit verlinkt sind;
- Ersetzen (S2) von jeweiligen Ressourceninstanzen, die mit Alarmen verknüpft sind, durch ihre jeweiligen Ressourcenarten;
- Zusammenführen (S3) eines ersten Paares von Ressourcenarten und verknüpften Alarmarten, die durch eine erste Abhängigkeit verlinkt sind, und eines zweiten Paares von Ressourcenarten und verknüpften Alarmarten, die durch eine zweite Abhängigkeit verlinkt sind, wenn (a) eine erste Ressourcenart und deren verknüpfte Alarmart des ersten Paares mit einer ersten Ressourceart und einer verknüpften Alarmart des zweiten Paares identisch sind und (b) eine zweite Ressourcenart und deren verknüpfte Alarmart des ersten Paares mit einer zweiten Ressourcenart und einer verknüpften Alarmart des zweiten Paares identisch sind und (c) wenn die topologischen Informationen der ersten Abhängigkeit und der zweiten Abhängigkeit identisch sind;
- Bereitstellen einer summierten Alarmabhängigkeitsstruktur, SADS, die aus dem Zuweisen, Ersetzen und Zusammenführen resultiert, für einen Klassifizierer;

- Erhalten einer Netzwerkzustandsklasse als eine Funktion der SADS unter Verwendung eines Klassifizierermodells, das bei einem vorherigen Training auf Basis von mindestens einer summierten Alarmabhängigkeitsstruktur und einer verknüpften bekannten Netzwerkzustandsklasse erhalten wurde; wobei das Klassifizierermodell zuvor unter Verwendung von Trainingsdaten trainiert wurde, die durch Anwenden eines Verfahrens nach Anspruch 12 erhalten wurden.

**Revendications**

1. Dispositif de traitement de données (1700) pour fournir des données d'entraînement à un classificateur pour surveiller un réseau d'instances de ressources, ledit classificateur fournissant une classe d'état de réseau, dans lequel les instances de ressources sont organisées selon une topologie, les instances de ressources ayant des types de ressources respectifs définissant une catégorie de ressource, au moins une partie des instances de ressources générant des alarmes, les alarmes ayant des types d'alarmes respectifs définissant des catégories d'alarmes comprenant :

   - des moyens (1501, 1502) pour obtenir une structure de dépendance d'alarme, ADS, (400) comprenant des dépendances (401) entre les alarmes, dans lequel une alarme de ladite ADS est associée à l'instance de ressource qui l'a générée et à son type d'alarme, ladite ADS étant associée à une classe d'état de réseau ;
   - des moyens pour attribuer (103, S1) des informations topologiques à une dépendance donnée, lesdites informations topologiques étant fonction d'un lien dans la topologie des instances de ressources associées aux alarmes liées par ladite dépendance donnée ;
   - des moyens pour remplacer (103, S2) les instances de ressources respectives associées aux alarmes par leurs types de ressources respectifs ;
   - des moyens pour fusionner (103, S3) une première paire de types de ressources et des types d'alarmes associés liés par une première dépendance, et une deuxième paire de types de ressources et des types d'alarmes associés liés par une deuxième dépendance si (a) un premier type de ressource et son type d'alarme associé de la première paire sont identiques à un premier type de ressource et à un type d'alarme associé de la deuxième paire et (b) un deuxième type de ressource et son type d'alarme associé de la première paire sont identiques à un deuxième type de ressource et à son type d'alarme associé de la deuxième paire et (c) si les informations topologiques de la première dépendance et de la deuxième dépendance sont identiques ;
   - des moyens (103) pour fournir des données d'entraînement pour un entraînement de classificateur (1503), lesdites données d'entraînement comprenant ladite classe d'état de réseau et une structure de dépendance d'alarme résumée, SADS, résultant de ladite attribution, dudit remplacement et de ladite fusion.

2. Dispositif selon la revendication 1, dans lequel lesdits moyens (1501, 1502) pour obtenir une première structure de dépendance d'alarme sont en outre configurés pour obtenir les dépendances de ladite première structure de dépendance d'alarme à partir d'une analyse de corrélations et/ou de relations causales d'événements dans un journal d'alarmes.

3. Dispositif selon l'une des revendications précédentes, dans lequel la topologie comprend des instances de ressources dudit réseau et des connexions physiques et/ou virtuelles et/ou logiques entre lesdites ressources de réseau.

4. Dispositif selon l'une des revendications précédentes, dans lequel lesdites informations topologiques comprennent, pour des topologies de réseau hiérarchiques, un parmi :

   - la séquence de type de ressource de la séquence d'instance de ressource commune la plus longue (601) obtenue en faisant concorder des séquences d'instances de ressources partant d'un nœud racine de ladite topologie hiérarchique avec les instances de ressources d'alarmes liées par une dépendance ; ou
   - le dernier terme commun le plus proche des instances de ressources de la séquence de type de ressource de la séquence d'instance de ressource commune la plus longue obtenue en faisant concorder des séquences d'instances de ressources partant d'un nœud racine de ladite topologie hiérarchique avec les instances de ressources d'alarmes liées par une dépendance, dans le cas où ledit dernier terme de la séquence de type de ressource commune la plus longue permet de déterminer de manière déterministe ladite séquence de type à partir de la racine.

5. Dispositif selon l'une des revendications 1 à 3, dans lequel lesdites informations topologiques comprennent, pour les topologies de réseau plates, la séquence de type de ressource commune la plus courte entre deux instances de ressources d'alarmes liées par une dépendance.

6. Dispositif selon l'une des revendications précédentes, dans lequel lesdits moyens d'attribution, de remplacement et de fusion sont en outre configurés pour traiter une pluralité de structure de dépendance d'alarmes (400) pour obtenir une seule structure de dépendance d'alarme résumée (600).

7. Dispositif selon l'une des revendications précédentes, dans lequel ladite classe est l'une parmi un ou plusieurs états de comportement normaux et un ou plusieurs états de comportement défectueux.

8. Dispositif selon l'une des revendications précédentes, dans lequel lesdits moyens d'entraînement sont en outre configurés pour entraîner un classificateur avec une pluralité de structure de dépendance d'alarme résumées associées à au moins une classe.

9. Dispositif selon l'une des revendications précédentes, comprenant en outre

   - des moyens (105) pour visualiser ladite structure de dépendance d'alarme sous la forme d'un graphique dans lequel les dépendances sont montrées sous forme d'arêtes reliant des sommets, dans lequel une représentation de sommet comprend une instance de ressource et un type de ressource correspondant, ainsi qu'un type d'alarme pour les instances de ressources qui ont généré une alarme ; et
   - des moyens (106) pour visualiser ladite structure de dépendance d'alarme résumée sous la forme d'un graphique dans lequel les dépendances sont montrées sous forme d'arêtes reliant des sommets, dans lequel les dépendances sont représentées avec leurs informations topologiques associées, et dans lequel une représentation de sommet comprend un type de ressource et un type d'alarme.

10. Dispositif selon l'une des revendications précédentes, dans lequel lesdits moyens de fusion sont en outre configurés pour agréger des métadonnées associées à au moins une partie d'une pluralité de dépendances de ladite structure de dépendance d'alarme fusionnée en une dépendance unique, afin de former des métadonnées de la dépendance unique résultant de la fusion.

11. Dispositif de traitement de données (1700) pour surveiller un réseau d'instances de ressources dans lequel les instances de ressources sont organisées selon une topologie, les instances de ressources ayant des types de ressources respectifs définissant une catégorie de ressource, au moins une partie des instances de ressources générant des alarmes, les alarmes ayant des types d'alarmes respectifs définissant des catégories d'alarmes comprenant :

   - des moyens (1601, 1602) pour obtenir une deuxième structure de dépendance d'alarme, ADS, (400) pour laquelle une classe d'état de réseau doit être déterminée, ladite ADS comprenant des dépendances (401) entre les alarmes, dans lequel une alarme de ladite ADS est associée à l'instance de ressource qui l'a générée et à son type d'alarme ;
   - des moyens pour attribuer (1603) des informations topologiques à une dépendance donnée, lesdites informations topologiques étant fonction d'un lien dans la topologie des instances de ressources associées aux alarmes liées par ladite dépendance donnée ;
   - des moyens pour remplacer (1603) des instances de ressources respectives associées aux alarmes par leurs types de ressources respectifs ;
   - des moyens pour fusionner (1603) une première paire de types de ressources et des types d'alarmes associés liés par une première dépendance, et une deuxième paire de types de ressources et des types d'alarmes associés liés par une deuxième dépendance si (a) un premier type de ressource et son type d'alarme associé de la première paire sont identiques à un premier type de ressource et à un type d'alarme associé de la deuxième paire et (b) un deuxième type de ressource et son type d'alarme associé de la première paire sont identiques à un deuxième type de ressource et à son type d'alarme associé de la deuxième paire et (c) si les informations topologiques de la première dépendance et de la deuxième dépendance sont identiques, et pour fournir une structure de dépendance d'alarme résumée, SADS, résultant de ladite attribution, dudit remplacement et de ladite fusion, à des moyens de classification (1604) ;
   - des moyens de classification (1604) pour fournir une classe d'état de réseau en fonction de ladite SADS ; dans lequel lesdits moyens de classification utilisent un modèle de classification obtenu lors d'un entraînement préalable en se basant sur au moins une structure de dépendance d'alarme résumée et une classe d'état de réseau connue associée ; dans lequel le modèle de classification a été préalablement entraîné en utilisant des données d'entraînement obtenues en appliquant un procédé selon la revendication 12.

12. Procédé mis en œuvre par un dispositif de traitement de données (1700) pour fournir des données d'entraînement à un classificateur pour surveiller un réseau d'instances de ressources, ledit classificateur fournissant une classe d'état de réseau pour une structure de dépendance d'alarme, dans lequel les instances de ressources sont organisées selon une topologie, les instances de ressources ayant des types de ressources respectifs définissant une catégorie de ressource, au moins une partie des instances de ressources générant des alarmes, les alarmes ayant des types d'alarmes respectifs définissant des catégories d'alarmes comprenant les étapes suivantes :

- obtenir une structure de dépendance d'alarme, ADS, (400) comprenant des dépendances (401) entre les alarmes, dans lequel une alarme de ladite ADS est associée à l'instance de ressource qui l'a générée et à son type d'alarme, ladite ADS étant associée à une classe d'état de réseau ;
- attribuer (S1) des informations topologiques à une dépendance donnée, lesdites informations topologiques étant fonction d'un lien dans la topologie des instances de ressources associées aux alarmes liées par ladite dépendance donnée ;
- remplacer (S2) des instances de ressources respectives associées aux alarmes par leurs types de ressources respectifs ;
- fusionner (S3) une première paire de types de ressources et des types d'alarmes associés liés par une première dépendance, et une deuxième paire de types de ressources et des types d'alarmes associés liés par une deuxième dépendance si (a) un premier type de ressource et son type d'alarme associé de la première paire sont identiques à un premier type de ressource et à un type d'alarme associé de la deuxième paire et (b) un deuxième type de ressource et son type d'alarme associé de la première paire sont identiques à un deuxième type de ressource et à son type d'alarme associé de la deuxième paire et (c) si les informations topologiques de la première dépendance et de la deuxième dépendance sont identiques ;
- fournir ladite classe d'état de réseau et une structure de dépendance d'alarme résumée, SADS, résultant de ladite attribution, dudit remplacement et de ladite fusion, pour entraînement de classificateur.

13. Procédé mis en œuvre par un dispositif de traitement de données (1700) pour surveiller un réseau d'instances de ressources dans lequel les instances de ressources sont organisées selon une topologie, les instances de ressources ayant des types de ressources respectifs définissant une catégorie de ressource, au moins une partie des instances de ressources générant des alarmes, les alarmes ayant des types d'alarmes respectifs définissant des catégories d'alarmes comprenant les étapes suivantes :

- obtenir une structure de dépendance d'alarme, ADS, (400) pour laquelle une classe d'état de réseau doit être déterminée, ladite ADS comprenant des dépendances (401) entre les alarmes, dans lequel une alarme de ladite ADS est associée à l'instance de ressource qui l'a générée et à son type d'alarme ;
- attribuer (S1) des informations topologiques à une dépendance donnée, lesdites informations topologiques étant fonction d'un lien dans la topologie des instances de ressources associées aux alarmes liées par ladite dépendance donnée ;
- remplacer (S2) les instances de ressources respectives associées aux alarmes par leurs types de ressources respectifs ;
- fusionner (S3) une première paire de types de ressources et des types d'alarmes associés liés par une première dépendance, et une deuxième paire de types de ressources et des types d'alarmes associés liés par une deuxième dépendance si (a) un premier type de ressource et son type d'alarme associé de la première paire sont identiques à un premier type de ressource et à un type d'alarme associé de la deuxième paire et (b) un deuxième type de ressource et son type d'alarme associé de la première paire sont identiques à un deuxième type de ressource et à son type d'alarme associé de la deuxième paire et (c) si les informations topologiques de la première dépendance et de la deuxième dépendance sont identiques ;
- fournir une structure de dépendance d'alarme résumée, SADS, résultant de ladite attribution, dudit remplacement et de ladite fusion, à un classificateur ;
- obtenir une classe d'état de réseau en fonction de ladite SADS en utilisant un modèle de classification obtenu lors d'un entraînement préalable en se basant sur au moins une structure de dépendance d'alarme résumée et une classe d'état de réseau connue associée ; dans lequel le modèle de classification a été préalablement entraîné en utilisant des données d'entraînement obtenues en appliquant un procédé selon la revendication 12.

**FIG. 1**

EP 4 068 693 B1

FIG. 2

**FIG. 3**

ADS-1

400

r4: RT0

r3: RT1

r1: RT

AT1

r2: RT

AT2

Alarm1    401    Alarm2

**FIG. 4a**

ADS-2

r4': RT0

r3':RT1    r3'': RT1

r1': RT

AT1

r2': RT

AT2

Alarm3    402    Alarm4

**FIG. 4b**

RT

AT1

RT

AT2

**FIG. 5a**

TRX

AT1

TRX

AT2

**FIG. 5b**

FIG. 4c

FIG. 4d

**FIG. 6a**

**FIG. 6b**

**FIG. 6c**

**FIG. 6d**

FIG. 7a

FIG. 7b

ADS-1

ADS-4

Alarm1    Alarm2

Alarm3    Alarm4    Alarm5

**FIG. 8a**

ADS-1

ADS-4

Alarm1    Alarm2    Alarm3    Alarm6

Alarm8

Alarm4

**FIG. 8b**

EP 4 068 693 B1

FIG. 9

EP 4 068 693 B1

**ADS Summarization**

**Alarm Dependency Structures (ADS)**

101

$\{\ AT_i\ |\ RI_i\ |\ RT_i\ |\ AT_j\ |\ RI_j\ |\ RT_j\ \}$

**Label** ADS links with their topological context

$Label(<AT_i, RI_i>, <AT_j, RI_j>)$  (S1)

$\{\ AT_i\ |\ RI_i\ |\ RT_i\ |\ AT_j\ |\ RI_j\ |\ RT_j\ |\ L_{ij}\ \}$

$RI_i$ and $RI_j$ topological links

**ADS Visualization**

105

**Resource Topology Graph (TOPO)**

102

**Modify** ADS nodes

$Modify(RI_i, RI_j)$

Replace ADS resource instances by their types  (S2_1)

(S2)

$\{\ AT_i\ |\ RT_i\ |\ AT_j\ |\ RT_j\ |L_{ij}\ \}$

**Merge** ADS nodes

(S3)

103

**FIG. 10**

FIG. 11

**ADS Summarization**

**Modify** ADS
$Modify(RI_i, RI_j)$   (S2)

$\{ AT_i \mid RT_i \mid AT_j \mid RT_j \mid L_{ij} \}$

**Merge** ADS identical nodes

Apply *groupBy* operation on ADS relationships
$key = AT_i \mid RT_i \mid AT_j \mid RT_j \mid L_{ij}$   (S3_1)

Summarized ADS (SADS)
$\{ AT_i \mid RT_i \mid AT_j \mid RT_j \mid L_{ij} \mid stats(\#occur, ...) \}$
(tabular representation)

Represent SADS graphs   (S3_2)

(S3)

103

106

SADS
Visualization

104

Summarized Alarm
Dependency Structures
(SASD)

EP 4 068 693 B1

Summarized ADS (SADS)

$$\{AT_i \mid RT_i \mid AT_j \mid RT_j \mid L_{ij} \mid \; stats(\#occur, \dots)\}$$

Represent SADS graphs

**For each SADS relationship**

Initiate a graph
$G_{at}$

S3_2_1

$G_{at}$ →

Process the left part:
$AT_i \mid RT_i$, create:
$< RT_i, AT_i >$ node

S3_2_2

Updated $G_{at}$

Process the right part:
$AT_j \mid RT_j$, create:
$< RT_j, AT_j >$ node

S3_2_3

Updated $G_{at}$

Add a weighted edge (stats) to
$G_{at}$, labelled with $L_{ij}$:
$\ll RT_i, AT_i >, L_{ij}, < RT_j, AT_j \gg$

S3_2_4

S3_2

106

SADS
Visualization

104

Summarized Alarm
Dependency Structures
(SASD)

SADS relationships:
- tabular form
$\{AT_i \mid RT_i \mid AT_j \mid RT_j \mid L_{ij} \mid \; stats(\#occur, \dots)\}$
- graphs $\{ G_{at} \}$

**FIG. 12**

FIG. 13a

FIG. 13b

FIG. 13c

FIG. 13d

FIG. 13e

FIG. 13f

FIG. 13g

FIG. 13h

FIG. 13i

FIG. 14a

FIG. 14b

EP 4 068 693 B1

FIG. 15

**FIG. 16**

**FIG. 17**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3796176 A1

- US 2017279960 A1

**Non-patent literature cited in the description**

- **ELMAJED et al.** *Machine Learning Approaches to Early Fault Detection and Identification in NFV Architectures*